(19) Europäisches Patentamt
European Patent Office
Office européen des brevets

(11) **EP 2 337 656 B1**

(12) **EUROPEAN PATENT SPECIFICATION**

(45) Date of publication and mention
of the grant of the patent:
**04.03.2015 Bulletin 2015/10**

(21) Application number: **09778212.2**

(22) Date of filing: **31.08.2009**

(51) Int Cl.:
***B25J 13/02*** *(2006.01)*     ***G06F 3/01*** *(2006.01)*

(86) International application number:
**PCT/EP2009/006283**

(87) International publication number:
**WO 2010/022982 (04.03.2010 Gazette 2010/09)**

(54) **METHOD FOR REMOTE MECHANISM ACTUATION AND EXOSKELETON APTIC INTERFACE BASED THEREON**

VERFAHREN FÜR FERNMECHANISMUSBETÄTIGUNG UND DARAUF BASIERENDE HAPTISCHE EXOSKELETTSCHNITTSTELLE

PROCÉDÉ D'ACTIONNEMENT À DISTANCE D'UN MÉCANISME ET INTERFACE HAPTIQUE D'EXOSQUELETTE BASÉE SUR CELUI-CI

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.08.2008 IT PI20080082**

(43) Date of publication of application:
**29.06.2011 Bulletin 2011/26**

(73) Proprietor: **Scuola Superiore S.Anna
56127 Pisa (IT)**

(72) Inventors:
• **BERGAMASCO, Massimo
I-56010 Castelmaggiore -Calci (IT)**
• **SALSEDO, Fabio
I-56125 Pisa (IT)**
• **FONTANA, Marco
I-56124 Pisa (IT)**

(74) Representative: **Celestino, Marco
ABM Agenzia Brevetti & Marchi
Viale G. Pisano, 31
56123 Pisa (IT)**

(56) References cited:
**WO-A-95/10396       WO-A-99/21478
DE-A1- 19 954 832    US-A1- 2007 089 557**

**Description**

<u>Field of the invention</u>

The present invention relates to:

- a method for remotely actuating a mechanism,
- a remote centre of rotation mechanism (RCRM) which is actuated according to the method, and
- a hand exoskeleton haptic interface that is based on such remote centre of rotation mechanism.

The method and the mechanism can be used, for instance, to provide devices that are suitable for implementing human-isomorphic kinematics, such as active ortheses, exoskeletons for human performance augmentation or for rehabilitation, haptic interfaces of exoskeleton type for applications of virtual reality (VR) and tele-operated systems, surgical robots and the like.

<u>Background of the invention</u>

Robotic systems are known, which interact with human limbs, comprising rigid links and one or more mechanisms, which are adapted to connect such links to one another, in order to form one-degree-of-freedom or multiple-degrees-of-freedom devices. A multiple-degrees-of-freedom device can comprise a plurality of one-degree-of-freedom mechanisms that are serially connected to each other through a plurality of intermediate links, to provide a kinematic serial chain. In this case the first link of the chain is called proximal link, the last link of the chain is called distal link, and the intermediate links, if any, are called medial links. Furthermore, the devices comprise actuators for applying a motive force to the mechanism.

In some robotic systems that physically interact with the human being, like active ortheses, exoskeletons for rehabilitation purposes, exoskeleton haptic interfaces, surgical, VR or tele-operated systems, specific objects are pursued. In particular, it is desirable:

- to limit the weight and total encumbrance of the device,
- to limit the weight of the movable parts of the device,
- to implement a kinematics that is as far as possible isomorphic to human limbs kinematics; in other words, the axis of the joints of the device must be substantially aligned with the corresponding axis of the joints of the limbs with which the device interacts.

As well known, the first and the second objects can be pursued by positioning the actuators on a fixed base or on a proximal link of the device, i.e. in a position that is far away from the medial links and the distal link.

The use of remote centre of rotation mechanisms, or RCRMs, is also known, to limit the physical encumbrance of the part of the mechanism in the neighbourhood of the rotational axis, as it is described for instance in US2006264915 and US2003221504. These documents describe surgical robots for mini-invasive operations, in which a two-degrees-of-freedom rotatable joint must be implemented in which two rotational axis intersects close to a cut on the patient's skin: to this purpose, and to limit interference with the patient's body, at least one RCRM is used. Nevertheless, both US2006264915 and US2003221504 fail to achieve a satisfactory result due to the encumbrance of the components of the device that is used to actuate respective mechanisms, i.e. to transmit the movement from an actuator to the mechanism.

In the case of the haptic interfaces of VR or tele-operated systems, and in the case of rehabilitation exoskeletons, it is necessary:

- to reduce the mass of the movable parts, for improving the performances of the feedback force in terms of bandwidth of the force actuation, steadiness and precision;
- providing a kinematics that is as far as possible isomorphic to the human limbs kinematics, to allow a good estimation of the posture of the limbs.

Haptic interfaces are known that are specifically conceived to solve such problems. For example, WO95/10396 discloses a hand exoskeleton, which comprises several finger exoskeleton members that are substantially isomorphic to respective fingers, with which they interact. Four rotational degrees of freedom for each finger exoskeleton member are provided, three of which are sensorized and actuated about an axis that is aligned with the axis of respective flexion/extension phalanx joints, and one degree of freedom which is only sensorized, but not actuated. Each finger exoskeleton member comprises:

- an RCRM based on a circular guide, which is used for implementing the proximal flexion/extension joint;
- three revolute joints, which are conventionally made by means of ball bearings, for implementing the medial and distal flexion/extension joints, as well as the abduction/adduction joint;
- three cable transmission systems, which are used to transmit the torque from each actuator to the respective joint.

The actuators are arranged on the first mobile link, i.e. far away from the respective actuated joint.

Such exoskeleton has the following drawbacks:

- the cumbersome parts are located laterally with respect to the mechanisms, therefore the abduction/adduction movements are somewhat hindered;
- a relatively high torque is needed to actuate the mechanism, therefore relatively large sized actuators are required, which increase the overall device encumbrance;
- the cables are pliable and the gear ratio between the actuators and the respective joints is relatively low, therefore the cable transmission in scarcely stiff;
- the circular guide is heavy and relatively difficult to make.

Light and compact devices, with particular reference to mobile parts, which are well suited for implementing a kinematics that is substantially isomorphic to human limbs kinematics, are also required to provide active ortheses and exoskeletons for human performance augmentation. These are robotic systems that may be used, for instance, to assist the old and/or disable people mobility. Such systems should be comfortable for the user, and flexible to use. This goals are accomplished again by positioning the actuators far away from the joints they actuate; furthermore, a weight and encumbrance reduction can be obtained by actuation techniques that require less the torque to the actuators. A kinematics as far as possible isomorphic to human limbs kinematics is useful to achieve this reduction; furthermore, such isomorphic kinematics allows providing devices in which the movements that corresponds to joint movements are comprised within the physiological range of human limbs relative movements, which is an essential safety requirement.

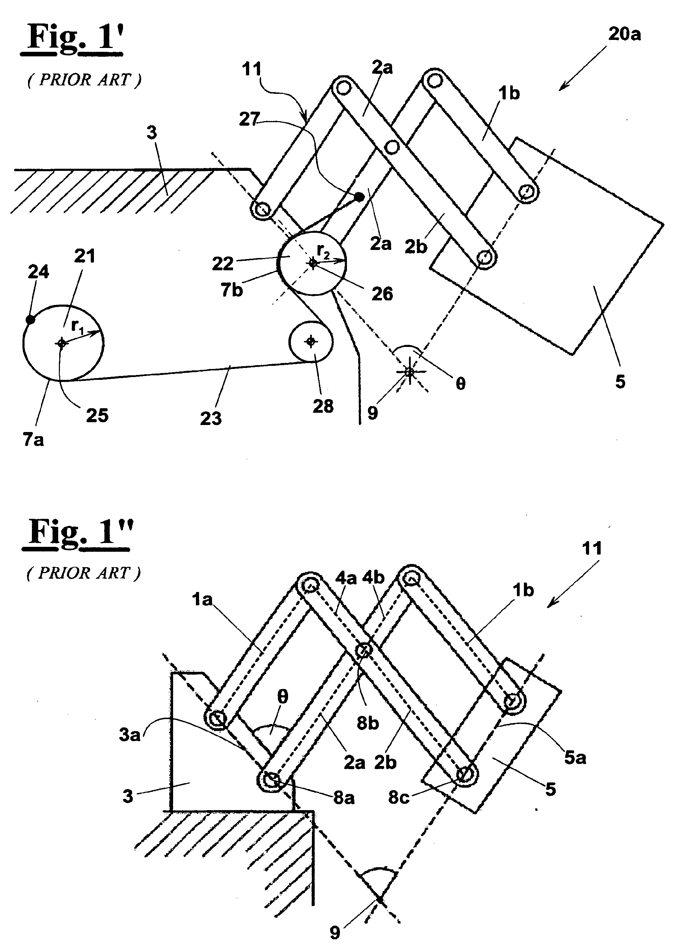

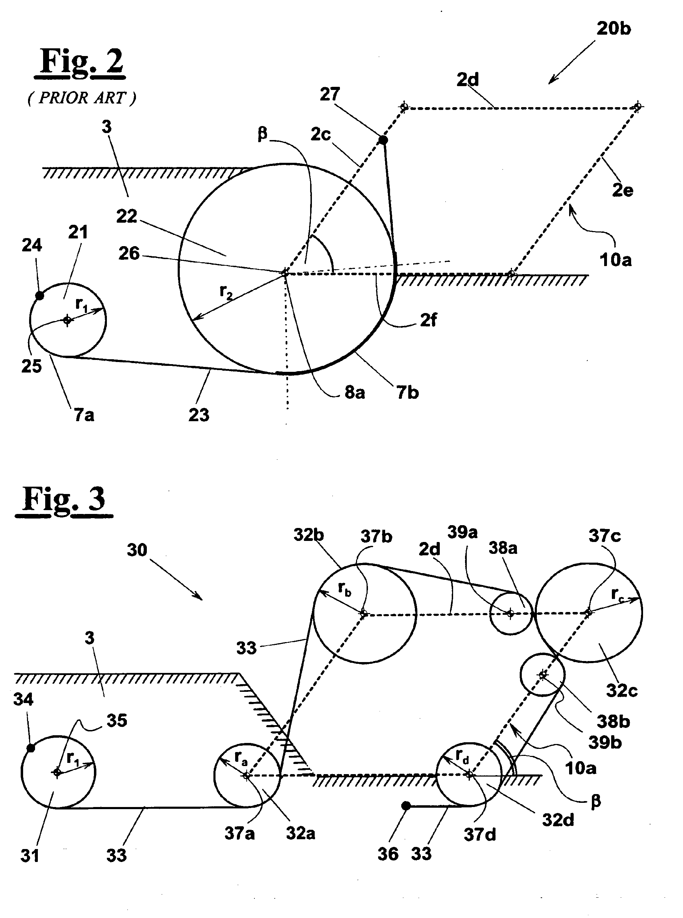

Figures 1A and 2 show prior art technique based devices 20a and 20b for respectively actuating a pantograph mechanism 11 and a parallelogram mechanism 10a. As shown more in detail in figure 1B, pantograph mechanism 11 is a particular RCRM formed by two articulated parallelograms 1a and 1b, which are connected to each other such that a first movable arm 2a of first parallelogram 1 a, proximate to fixed arm 3a, is integral to a first arm 4b of second parallelogram 1 b and a second movable arm 4a of first parallelogram 1 a, proximate to a first movable arm 2a of first parallelogram 1 a, is integral to a second arm 2b of second parallelogram 1 b, proximate to a first arm 4b of second parallelogram 1b. In particular, arms 4b and 2b of second parallelogram 1 b are respectively an extension of arms 2a and 4a of first parallelogram 1a. The two couples of stiff bodies (2a,4b), (2b,4a) are then rotatable with respect to each other about a point at which a revolute joint 8b is arranged. This way, the relative position of parallelogram 1 a and parallelogram 1 b is completely defined by angle θ formed between respective directions of first arm 2a and fixed arm 3a. Pantograph mechanism 11 has therefore only one degree of freedom, even if it comprises a plurality of revolute joints. Owing to the features of parallelograms, arm 5a of second parallelogram 1b, which is parallel to arm 4b of the same parallelogram, rotates about an axis that is fixed with respect to fixed arm 3a of first parallelogram 1a. The intersection of this axis with the plane where mechanism 11 extends is the remote centre of rotation 9.

According to the above-mentioned prior art, the following parts are provided for actuating pantograph mechanism 11 or parallelogram mechanism 10a (figures 1A and 2):

- a drive pulley 21 that its axis integral to a fixed arm 3 and is rotatably arranged about the shaft 25 of an actuator, not shown;
- an idle pulley 22 that is connected to a movable arm of mechanism 11 or 10a; the axis 26 of idle pulley 22 coincide with the axis of revolute joint 8a arranged between movable arm 2a the mechanism 11 or 10a and fixed side 3a (figure 1B),
- a tightened cable 23 that has ends 24 and 27 respectively fixed at a peripheral point 24 of drive pulley 21 and at a point 27 of mechanism 11 or 10a; cable 23 is partially wound about drive pulley 21 and idle pulley 22, with which respective contact arcs 7a and 7b are formed.

Cable 23 transmits an actuating torque from drive pulley 21 to mechanism 11 or 10a, which causes a movement of the mechanism. In particular, arms 3a and 5a of pantograph RCRM mechanism 11, i.e. stiff arms 3 and 5, perform a relative rotation about centre of rotation 9 by angle θ (figure 1A), whereas arm 2d of parallelogram mechanism 10a translates with respect to arm 2f of the same mechanism, the position of arm 2d being defined with respect to arm 2f by an angle β (figure 2) by which the only degree of freedom of parallelogram mechanism 10a can be described.

A deflecting pulley 28 (figure 1B) may be provided for guiding cable 23 by drive pulley 21 up to idle pulley 22, in such way that contact arc 7b can be formed between cable 23 and idle pulley 22.

As well known, the ratio R between the torque $M_1$ provided by the actuator that moves drive pulley 21 and the torque $M_2$ received at mechanism 11 or 10a is equal to the ratio between the angular speed $\omega_2$ of idle pulley 22 and the angular speed $\omega_1$ of drive pulley 21, which in turn is equal to the ratio between the radius $r_1$ of drive pulley 21 and the radius $r_2$ of drive pulley 22, i.e.

$$R \equiv \frac{M_1}{M_2} = \frac{\omega_2}{\omega_1} = \frac{r_1}{r_2} \qquad [1]$$

A reduction of the torque that the actuator has to supply for obtaining a given torque at mechanism 11-b, according to the prior art, can be achieved only by lowering the ratio between idle pulley 22 radius $r_1$ and drive pulley 21 radius $r_2$, i.e. by decreasing $r_1$ and/or by increasing $r_2$. However, drive pulley 21 radius $r_1$ cannot be reduced at will, to avoid premature fatigue failure of cable 23. On the other hand, in the case of an exoskeleton or of a haptic device, an interference may arise between a cumbersome idle pulley 22 and the limb with which the device interacts; in such applications as virtual reality and tele-operated systems, a cumbersome idle pulley may unacceptably limit the visual field. More in general, by increasing idle pulley 22 radius $r_2$, the overall dimensions of the actuated mechanism could unacceptably increase.

A further prior art device is known from US2007/089557, in which a multiple-cable transmission mechanism is provided for an end effector. A robotic arm is provided which comprises a linkage assembly and a strap drive train. The linkage assembly has a plurality of links pivotally coupled in series together with a plurality of joints to define a parallelogram with an insertion axis. The strap drive train includes first and second sets of straps coupled to the linkage assembly. Nevertheless, this device cannot reduce the torque that the actuator has to supply for obtaining a given torque at end effector, in other word it is not suitable for multiplying the torque from the actuator to the end effector.

Briefly, above mentioned prior art methods for remotely actuating mechanisms, in particular pantograph and RCRN mechanisms, does not allow neither multiplying output torque, nor increasing transmission stiffness, unless a cumbersome motor or a cumbersome transmission element, like idle pulley 22, is provided, which may be unacceptable for a wide range of applications where such mechanisms may be required.

Therefore, a need is felt of a method and a device for actuating mechanisms, in particular pantograph mechanisms and other RCRM mechanisms, by which high output torques and improved transmission stiffness can be achieved, without increasing either actuator size or actuated mechanism overall dimensions; in particular, the method and the device should be obtained without arranging cumbersome mechanic components closely to the part of the mechanism at which a tool and/or an interface with human body are located.

Summary of the invention

It is therefore an object of the present invention to provide a method for remotely actuating a mechanism, in particular a remote centre of rotation mechanism (RCRM) or a pantograph mechanism, which overcomes the above-mentioned limits of prior art methods.

It is a particular object of the invention to provide such a method which allows increasing the torque or force that is produced at an output link of the mechanism without using a large sized actuator and/or a cumbersome force/torque transmission component, such as a large diameter idle pulley at the mechanism entrance.

It is another particular object of the invention to provide such a method which reduces the torque that an actuator has to supply for producing a given torque or force at an output link of the mechanism, without using a cumbersome force/torque transmission component such as a large diameter idle pulley at the mechanism entrance.

It is another particular object of the invention to provide such a method which increases the torque/force transmission stiffness of the actuated mechanism.

It is another object of the present invention to provide a device for remotely actuating a mechanism, in particular a remote centre of rotation mechanism (RCRM) or a pantograph mechanism, that is adapted to carry out such a method.

It is further object of the present invention to provide a haptic interface exoskeleton, in particular a haptic interface hand exoskeleton, based on such a method/device.

These and other objects are achieved by a method for actuating a mechanism, the mechanism having a predetermined number of degrees of freedom, the mechanism comprising a plurality of revolute joints, each revolute joint having a rotation axis, the mechanism connected to a first rigid link and a second rigid link, and the mechanism adapted to impose a prefixed relative movement between the first rigid link and the second rigid link, the method comprising the steps of:

- selecting a subset of one or more revolute joint/s among the plurality of revolute joints of the mechanism;

- rotatably arranging respective idle pulleys about the axis of the revolute joint/s of the subset,
- arranging an inextensible cable according to a prefixed routing, the routing extending between a traction point on the cable upstream of a first idle pulley and a terminal point fixed on one of the links or on the mechanism; and the routing comprising respective contact arcs of the inextensible cable about the idle pulleys,

characterized in that the number of idle pulleys that are arranged at the revolute joint/s of the subset is greater than the number of the degree/s of freedom of the mechanism,

such that by pulling the inextensible cable at the traction point a multiplied torque is produced which is the sum of singular torques produced by the inextensible cable at each idle pulley, the multiplied torque causing a relative movement between the links.

In particular, a first revolute joint of the subset has its respective rotation axis fixed with respect to the first link.

In particular, the first or the second link may be a base link, i.e. a link that is fixed with respect to a structure; in this case, the second fixed is called the output link of the mechanism.

Since the mutual distances between the axis of the revolute joints of the subset do not change during the movement of the mechanism, the same is for the idle pulleys; therefore, the length of each cable portion that does not engage a contact arc with any idle pulley, is not affected by the movement of the mechanism, while contact arc lengths generally change.

In particular, said subset comprises at least two revolute joints, and the distance between any couple of consecutive revolute joints of said subset is unchanged during any movements of said mechanism.

In particular, the routing is such that for a given movement of the mechanism all the contact arcs increase in length, or they all decrease in length.

The method allows generating an actuating torque at each idle pulley, starting from the tension that is generated in the inextensible cable by an actuator, a gripping point of which is connected to a traction point of the cable. Therefore, the method according to the invention is called "Distribute torque actuation technique".

For each idle pulley an actuating torque contribution is obtained by multiplying the tension of the cable by the radius of the idle pulley; such actuating torque acts on adjacent rigid links that are joined by the revolute joint, coaxially to which the idle pulley is arranged. The multiplied is the sum of all the actuating torque contributions of the mechanism.

Therefore, for a given tension that is generated by an actuator at the traction point of the cable, i.e., for a given torque delivered at a drive pulley, the distributed torque actuation technique allows obtaining a multiplied torque at the mechanism, or at an output link of it, with a reduced increase in overall dimensions of the actuated mechanism, in particular, without arranging bulky components close to the operating parts of the mechanism. Instead of arranging a cumbersome pulley between the drive pulley and the mechanism, small diameter idle pulleys are distributed throughout the mechanism, i.e. at revolute joints of the mechanism, which reduce the overall dimensions and mass of the actuated mechanism. Under another point of view, for a well-defined force/torque demand at the output link, the technique allows reducing the torque that the actuator has to supply. In other words, the equivalent actuator-to-mechanism reduction ratio can be greater than the maximum reduction ratio that can be obtained by the prior art technique for prefixed maximum overall dimensions of the actuated device.

The technique according to the invention shows a further advantage if some internal slack is present in the actuator, which frequently occurs in gearboxes: due to the higher equivalent reduction ratio, such slack will disturb less the smoothness of the movement of the output link than what is experienced by prior art devices.

In particular, the mechanism is a remote centre of rotation mechanisms (RCRM). More in particular, the remote centre of rotation mechanism is a pantograph mechanisms.

In alternative, but not exclusively, the mechanism is a parallelogram mechanism.

The mechanism to be actuated may also be a mechanism without revolute joint, provided that an auxiliary revolute joints-containing mechanism is coupled to the mechanism to be actuated in such a way that the mechanism which results from the coupling of the mechanism to be actuated and of the auxiliary mechanism has the same number of degrees of freedom of the mechanism to be actuated, which does not have revolute joints.

In case of a pantograph RCRM, the positions of all the rigid links are completely defined by means of one scalar parameter, which describes the only degree of freedom of the mechanism. Let $\theta$ be the scalar parameter, i.e. the angular position of the output link of the mechanism with respect to the fixed link; due to the properties of the articulated parallelograms, which form the pantograph mechanism, for a prefixed change $\Delta\theta$ of angle $\theta$, the angular relative positions between each adjacent rigid bodies changes by the same angle $\Delta\theta$. By these conditions, the torque that is generated at each revolute joint of the subset, at which an idle pulley is coaxially arranged, is transferred to the output link of the RCRM with a torque transmission ratio 1:1. Therefore, the total torque that is generated at the output link of the mechanism is the sum of the torques that are generated at the revolute joints of the subset. In other words, a pantograph RCRM that is actuated by the technique according to the invention is equivalent to an RCRM that is actuated by the prior art technique of figure 1B, in which a single idle pulley 22b, corresponding to the pulley that is arranged on the first revolute joint of the mechanism that is actuated according to the invention, has an equivalent radius that is equal to the sum of the radiuses of the idle pulleys on which the cable is wound.

Advantageously, the subset of revolute joints is a first subset of revolute joints, in which the inextensible cable, the respective routing, the traction point and the terminal point are respectively a first inextensible cable, a first routing, a first traction point and a first terminal point, the following further steps are provided:

- selecting a second subset of one or more revolute joint/s among the plurality of revolute joints of the mechanism;
- rotatably arranging respective idle pulleys about the axis of the revolute joint/s of the second subset,
- arranging a second inextensible cable according to a prefixed second routing, the second routing extending between a second traction point on the second cable upstream of a first idle pulley and a second terminal point fixed on one of the links or on the mechanism; and the second routing comprising respective contact arcs of the second inextensible cable partially wound about the idle pulleys,

wherein the number of idle pulleys that are arranged at the revolute joint/s of the second subset is greater than the number of the degree/s of freedom,

such that the mechanism is bilaterally actuated by pulling the first and the second inextensible cables at the respective first and second traction points, i.e. opposite torques/forces are selectively applied to the mechanism which causes corresponding opposite relative movements between the first and the second links. The distance between two consecutive revolute joints may be measured as the distance between respective axes of the revolute joints, parallel to the plane where the mechanism extends.

In particular, a first revolute joint of the second subset has its respective rotation axis fixed with respect to the first link.

In particular, the distance between any couple of consecutive revolute joints of the second subset is unchanged during any movement of the mechanism.

This way, the method allows implementing limb exoskeleton joints that move according to reciprocally opposite directions, such as the wrist, or the joints between the phalanxes of the fingers, where a flexion/extension movement is possible.

The first and the second routings may be advantageously made in such a way that the total length of the transmission cables, i.e. the length of the first cable plus the length of the second cable, is unchanged for any position that may be reached by the mechanism. This way, the tension of the cables during the actuation of the mechanism is the same as at rest. To this purpose, if the first and the second subset are formed by the same revolute joints, it is sufficient that the overall length of the contact arcs that are formed by the first and by the second cable with the idle pulleys does not change during the movement of the mechanism.

In particular, a first revolute joint of the second subset has its respective rotation axis fixed with respect to the first link.

In particular, the distance between any couple of consecutive revolute joints of the second subset is unchanged during any movement of the mechanism.

Advantageously, therefore, the first and the second subset of one or more revolute joint/s coincide with each other, and the first and the second cables form on each of the pulleys respective first and second contact arcs such that the first contact arcs vary in an opposite way with respect to the second contact arcs during the movements of the mechanism, i.e. when the first contact arcs increase, the second contact arcs decrease by a same length.

In particular, the sum of the respective angles that are formed by the first and by the second cable with each idle pulley is invariantly substantially equal to 180 degrees. This way, the total number of the idle pulleys that are necessary for bilaterally actuating the mechanism can be minimized.

The method provides furthermore a step of arranging a deflecting pulley, preferably a couple of deflecting pulleys, at a predetermined distance from the above-mentioned, idle pulleys, to ensure that, during the movement of the mechanism in its own field of movement, the cable is kept in contact with the idle pulleys that are arranged on the revolute joint. The axes of the deflecting pulleys are integral to the rigid links of the mechanism.

In particular, a plurality of idle pulleys are rotatably arranged about the axis of a revolute joint selected among the revolute joints of the subset, and a deflecting pulley is arranged preferably with its axis parallel to the axis of the selected revolute joint at a prefixed distance from the selected revolute joint, and the inextensible cable forms redundant contact arcs with each idle pulley of the plurality of idle pulleys; the inextensible cable also forms deflection arcs about the deflecting pulley; the deflection arcs are alternate to the redundant contact arcs along the inextensible cable. This way, the above-mentioned torque multiplication can be achieved by means of a small/simple mechanism which has a limited number of revolute joint. In this case, the deflecting pulley may in this reduce to a simple drum located in the vicinity of the selected revolute joint

A multiple-degrees-of-freedom mechanism may be advantageously actuated by the method according to the invention as well, in particular, the multiple-degrees-of-freedom mechanism may comprise a plurality of reciprocally interconnected one-degree-of-freedom mechanisms. For instance, such one-degree-of-freedom mechanisms may be serially connected to one another by means of a plurality of intermediate links, in such a way that a serial multiple-degrees-of-freedom mechanism is obtained. The first link of the serial mechanism is then called the proximal link, the last link is called the distal link or the output link, and intermediate link/s, if any, is/are called the medial link/s. Similarly, the first one-degree-of-freedom mechanism of the serial mechanism, which connects the proximal link to the first medial link, is called the proximal mechanism, the last one-degree-of-freedom mechanism of the serial mechanism that connects the last medial link with the distal link is called the distal mechanism and the intermediate mechanism/s, if any, is/are called the medial mechanism/s. Therefore, the proximal and the distal links are connected to another link by means of an one one-degree-of-freedom mechanisms and the medial link/s, if any, is/are connected to two links by means of two one-degree-of-freedom mechanisms. For instance, a three-degrees-of-freedom mechanism provides a fixed proximal link, a first movable medial link that is connected to the fixed proximal link by means a proximal mechanism, a second movable medial link that is connected to the first movable medial link by means a medial mechanism, and a movable distal link or an output link that is connected to the second medial link by means of a distal mechanism.

A full actuation of a n-degrees-of-freedom mechanism may be provided by means of n independent cable transmissions. If the n-degrees-of-freedom mechanism comprises n one-degree-of-freedom mechanisms, each cable transmission may actuate one respective one-degree-of-freedom mechanisms.

A corresponding number n of actuators may also be provided. Each actuator has a gripping point by which the actuator is connected to the traction point of the corresponding inextensible cable, such that a traction can be created in the inextensible cable through the gripping point.

Furthermore, the method may provide a step of arranging one or more actuators, integral to the proximal link of the mechanism, in order to reduce the mass of the movable parts of the actuating device of the mechanism, and to avoid cumbersome components proximate to on in the operative zone of the output link, where surgical instruments or various tools may be arranged. If the actuators are arranged on the proximal link of the mechanism, each cable that actuates the distal or a medial mechanism must cross the proximal and possibly one or more medial mechanisms, which are arranged before the respective actuated mechanism; the cable may form contact arcs with one or more idle pulleys of each crossed mechanisms. In this case, the crossing may take place in two different modes:

- an "active" mode, where the sum of the torques that are generated at the idle pulleys of the crossed mechanism is different from zero: in this case, an overall torque is produced on the crossed mechanism due to the tension of the crossing cable. To obtain this effect it is sufficient that for a given movement of the mechanism, all the contact arcs change in the same way, i.e. all the contact arcs increase or they all decrease;
- a "neutral" mode, in which the above-mentioned sum is equal to zero: in this case, the crossed mechanism is not affected by the cable that crosses it.

The active-mode crossing can reduce the torque that is required for actuating the crossed mechanism. For this reason, an active mode crossing is also called a cooperating crossing.

The neutral-mode crossing, instead, has the advantage of assisting the control of the actuating device of the mechanism, since the degrees of freedom of the mechanism are independent from one another.

In particular, the mechanism is a serial mechanism which has at least two degrees of freedom and comprises a proximal mechanism part and a distal mechanism part, wherein a cable portion of the routing that moves the distal mechanism part is wound also on idle pulleys of the proximal mechanism part such that the proximal mechanism part is unaffected by the cable portion. In other words, an one-degree-of-freedom mechanism that is arranged between an actuator and a mechanism that is actuated by this actuator, and is crossed as above indicated by a cable that transmits torques/forces from the actuator to the actuated mechanism is not affected by the transmission of such forces/torques.

Obviously, all this applies also in case of bilateral mechanism actuation, i.e. when two inextensible cables are provided for actuating opposite movements of the mechanism.

Advantageously, to provide a neutral-mode crossing

- the cable portion of the routing that moves the distal mechanism part and that is wound about the idle pulleys of the proximal mechanism part have an overall length that is unchanged during any movement of the proximal mechanism part,
- the radiuses of the idle pulleys of the proximal mechanism part on which the cable portion is wound have opposite sign depending on whether the respective contact arcs increase or decrease in length during a movement of the proximal mechanism, and the radii have sum equal to zero.

The above-mentioned objects, and other, are also achieved by a mechanism actuated according to the distributed torque actuation technique, and according to its improvements thereof, as it has been previously described, and as it is stated in the claims 1 to 9.

In particular, the objects are achieved by a RCRM, more in particular a pantograph RCRM, or by a parallelogram mechanism that is actuated according to the distributed torque actuation technique.

The above-mentioned objects, and other, are also achieved by a hand exoskeleton comprising

- a base link arranged in use substantially integral to the back of a hand of a user,
- at least one finger exoskeleton, comprising a mechanism having two or multiple-degrees-of-freedom, the finger exoskeleton comprising:
- a proximal link connected to the base link by means of a proximal remote centre of rotation mechanism, in particular a pantograph mechanism, having a rotation axis substantially aligned with the flexion/extension joint between the finger proximal phalanx and the metacarpus;
- a medial link connected to the proximal link by means of a medial remote centre of rotation mechanism, in particular a pantograph mechanism, having a rotation axis substantially aligned with the flexion/extension joint between the finger medial and proximal phalanges. The main feature of this exoskeleton is that a remote centre of rotation mechanisms of the remote centre of rotation mechanisms is actuated according to the distributed torque actuation technique or by an improvement thereof, as described in the above and as it is stated in the claims from 1 to 9

Each finger exoskeleton is therefore a mechanism that has at least two-degrees-of-freedom, and performs a kinematics that is isomorphic to the kinematics of the proximal phalanx of the finger with respect to the metacarpus, and to the kinematics of the medial phalanx with respect to the proximal phalanx.

Advantageously, the finger exoskeleton comprises a distal link arranged in use in contact with the palm side of the distal phalanx of the finger, the distal link connected to the medial link by means of a distal mechanism having one rotational degree of freedom, the distal link mechanism part having a rotation axis substantially aligned with the flexion/extension joint between the finger distal and medial phalanges,

the distal mechanism being in particular, selected from the group comprised of:

- a remote centre of rotation mechanism, based on a pantograph mechanism, forming together with the proximal and medial mechanisms a three-degrees-of-freedom mechanism actuated by the distributed torque actuation technique or by an improvement thereof, as above described;
- a simple crossed quadrilateral mechanism, actuated by a rotation of the medial link with respect to the proximal link. The matching kinematic of the distal mechanism with that medial allows reducing the number of actuators, being still the same as two the number of degrees of freedom for each finger exoskeleton this simplification is acceptable for normal applications, kept con that, in a human in conditions natural, the bending distal is carried out in concomitance when bending medial. In both cases, is caused to kinematics substantially isomorphic to the kinematics of the movement of flexo-extension of the phalanxes of the finger.

Advantageously, the medial mechanism is actuated by means of an inextensible cable which forms contact arcs on the idle pulleys of the proximal mechanism, the cable producing in the idle pulleys of the proximal mechanism a couple that has a non-zero resultant torque value during a movement of the medial mechanism, and/or the distal mechanism is actuated by means of a further inextensible cable having parts wound about the idle pulleys of the proximal and/or medial mechanism, the further cable forming contact arcs on the idle pulleys of the medial and/or proximal mechanism torques having a non-zero resultant torque value during a movement of the distal mechanism. In other words, the cable that actuates the medial mechanism crosses the proximal mechanism in active mode, and/or the cable that operates the distal mechanism crosses the medial mechanism and/or the proximal mechanism in active mode. This way, the medial transmission cooperates with the proximal transmission, and/or the distal transmission cooperates with that medial and/or with that proximal transmission: the tension of the transmission cable that actuates the distal mechanism, which is necessary to balance the external load transferred to the distal mechanism by the distal link, produces a torque on the medial mechanisms and/or on the proximal mechanism. Such torque contributes to equilibrate the medial and/or the proximal joints. Similarly, the tension of the transmission that actuates the medial mechanism, which is necessary to balance the external load transferred to the medial mechanism by the distal link, produces a torque on the proximal mechanism that serves to the equilibrate the proximal joint, in such a way that the torque requirements of the actuators is further reduced.

A further advantage of the active mode crossing is in this case the higher overall stiffness of the exoskeleton, evaluated at the distal link.

Preferably, the finger exoskeleton comprises a further link that is rotationally connected with the base link by means of a preferably conventional revolute joint, for instance a ball bearing, which has its axis substantially aligned with the axis of the abduction/adduction joint between the finger proximal phalanx and the metacarpus; in this case, the proximal link is connected to this further link; the proximal link is also connected to the fixed link preferably through to the further link and the conventionally implemented joint. Each finger exoskeleton has therefore three or four-degrees-of-freedom, and achieves a kinematics that is substantially isomorphic to the adduction/abduction kinematics as well as to the flexion/extension of the finger.

Brief description of the drawings

The invention will now be made clearer with the following description of some exemplary embodiments, exemplifying but not limitative, with reference to the attached drawings wherein:

- Figures 1A and 2 show respectively a pantograph RCRM and a parallelogram mechanism that are actuated according to prior art technique;
- Figure 1B is a more detailed view of the pantograph RCRM of figure 1A;
- Figure 3 shows the parallelogram mechanism of figure 2, actuated by the distribute torque actuation technique, according to the invention;
- Figure 4 shows a two-translational-degrees-of-freedom parallelogram-based mechanism that is actuated by distribute torque actuation technique;
- Figures 5, 8 and 9 show three embodiments of the distribute torque actuation technique, to actuate the pantograph RCRM of figure 1A;
- Figures 6 and 7 show another one-degree-of-freedom mechanism actuated by distribute torque actuation technique, in which a plurality of idle pulleys are coaxially arranged at one revolute joint of the mechanism;
- Figures 10 and 11 are two opposite side views of a hand finger exoskeleton, comprising a three-degrees-of-freedom mechanism that is bilaterally actuated by the technique according to the invention;
- Figure 12 shows schematically a parallelogram crossed mechanism, which is a part of the mechanism of figures figures 10 and 11;
- Figure 13 shows an alternate three-degrees-of-freedom mechanism that is suitable for use in a hand exoskeleton and for actuation by the technique according to the invention.

In the above-listed drawings, items that are similar and/or have the same function may be indicated with the same number, regardless of the embodiment of the invention they belong or refer to.

Description of preferred exemplary embodiments

Some devices are described hereinafter which use the distributed torque actuation technique according to the invention for actuating mechanisms, in particular, parallelogram-based and pantograph RCRM.
With reference to figure 3, a device 30 is described which actuates an one-translational-degree-of-freedom parallelogram mechanism 10a by means of the distributed torque actuation technique according to the invention. Device 30 comprises:

- a drive pulley 31 connected to an actuator (not shown) that creates a rotational movement of drive pulley 31 about axis 35;
- four idle pulleys 32a-d that are coaxially arranged at revolute joints 37a-d, which form a subset of revolute joints of mechanism 10a, which comprises in this case all the revolute joints of mechanism 10a; device 30 has therefore three idle pulleys more than the number of degrees of freedom (one) of actuated mechanism 10a;
- an inextensible cable 33 that has a traction end 34 connected at a peripheral point of drive pulley 31 and a further end 36, opposite to traction end 34, that is connected at a point of fixed link 3. Inextensible cable 33 comprises a traction contact arc that is formed with drive pulley 31, and further contact arcs that are formed with idle pulleys 32a-d; inextensible cable 33 causes idle pulleys 32a-d to rotate about respective axis.

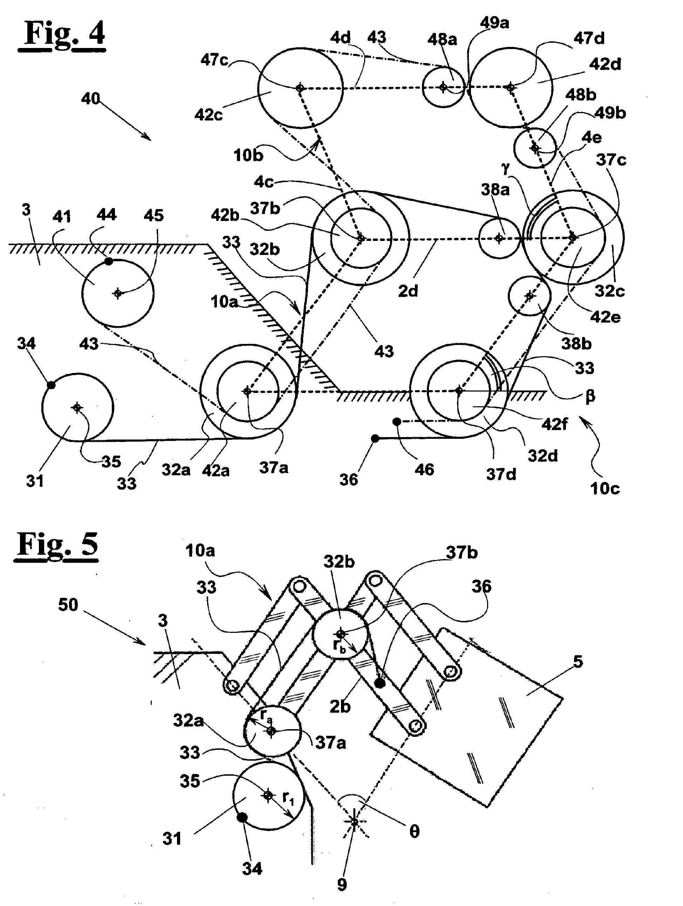

By rotating drive pulley 31, inextensible cable 33 is pulled at traction point 34 and singular torques are produced by inextensible cable 33 at each idle pulley 32 a-d. Parallelogram 10a receives therefore an overall, multiplied torque that is the sum of such singular torques. In other words, the overall torque acting on mechanism 10a is distributed on four revolute joint 37a-d. The overall torque causes a translational movement of arm 2d of parallelogram 10a, this movement being described by angle $\beta$, which represents the only degree of freedom of mechanism 10a.
A second, mobile rigid link may be provided integral to arm 2d of mechanism 10a. For the sake of clearness, the second link is not represented in figures 3 and 2. The same applies for arm 4d of figure 4, which also refers to a parallelogram-based mechanism actuated by the method according to the invention.
Furthermore, two deflecting pulleys 38a-b are rotatably arranged about axis 39a-b parallel to the axis of idle pulleys 32a-d; deflecting pulleys 38a-b serves to keep cable 33 in contact with idle pulley 32c during the movement of the mechanism.
Taking equation [1] into account, the ratio R between the torque an actuator provides at drive pulley 31, and the corresponding torque received by mechanism 10a, can be written:

$$R = \frac{r_1}{r_a + r_b + r_c + r_d} = \frac{r_1}{r_{eq}} \qquad [2]$$

where

- $r_1$ is the radius of drive pulley 31,
- $r_a$, $r_b$, $r_c$ and $r_d$, are the radiuses of idle pulleys 32a-d,
- $r_{eq}$ is the radius of an idle pulley 22 of prior art device 20b of figure 2.

Equation [2] means that device 30 can be reduced to an equivalent device 20b (figure 2) that is actuated by the technique according to the prior art, in which only one idle pulley 22 is provided, whose (equivalent) radius is equal to the sum of the radiuses of four idle pulleys 32a-d. By using relatively small idle pulleys 32a-d distributed at revolute joints 37a-d of mechanism 10a, it is possible to achieve the same torque reduction that may be obtained by using a cumbersome idle pulley 22, located at the first revolute joint 26, integral to fixed link 3.

As well known, the rotational stiffness of parallelogram and RCRM mechanisms of figures 1A, 1B and 2, is proportional to the square of the radius of the pulley 22. A rotational stiffness increase, which would be possible by increasing pulley radius 22, can be achieved by coaxially arranging a plurality of idle pulleys at revolute joints of the mechanism, provided that the sum of the squares of the radiuses of these idle pulleys is equal to the square of the radius of idle pulley 22. In the case of device 30, where four idle pulleys are provided, rotational stiffness is sixteen times the stiffness of an equivalent device that is actuated by the prior art technique as in figure 2, provided that all idle pulleys 22, 32 a-d have the same radius. The increase of rotational stiffness by the distributed torque actuation technique allows:

- using a reduced size actuator to actuate each movement of the mechanism;
- obtaining a high bandwidth of the force actuation;
- obtaining a substantial mechanical backlash reduction.

With reference to figure 4, a device 40 is described which uses the distributed torque actuation technique, according to the invention, for actuating a two-translational-degrees-of-freedom, double parallelogram mechanism 10c, which comprises a first parallelogram 10a, (see also figures 2 and 3), and a second parallelogram 10b, the two parallelograms having a common arm 2d. Device 40 comprises:

- two drive pulleys 31 and 41 connected to respective actuators (not shown) that create a rotational movement of drive pulleys 31 and 41 about respective axis 35 and 45;
- four idle pulleys 32a-d that are coaxially arranged at revolute joints 37a-d;
- six further idle pulleys 42a-f, which are coaxially arranged at revolute joints 37a-b, 47c-d, 37c-d; pulleys 37a-d and 47c-d forms a subset of six revolute joints of mechanism 10c, which comprises in this case all the six revolute joints of mechanism 10c. Therefore, device 40 has ten idle pulleys arranged at six revolute joints, i.e. a number of idle pulleys that is greater than the number of degrees of freedom (two) of mechanism 10c;
- an inextensible cable 33 that has a traction end 34 connected at a peripheral point of drive pulley 31 and a further end 36, opposite to said traction end 34, that is connected at a point 36 of fixed link 3. Inextensible cable 33 comprises a traction contact arc that is formed with drive pulley 31, and further contact arcs that are formed with idle pulleys 32a-d; inextensible cable 33 causes idle pulleys 32a-d to rotate about respective axis;
- an inextensible cable 43 that has a traction end 44 connected at a peripheral point of drive pulley 41 and a further end 46, opposite to said traction end 44, that is connected at a point of fixed link 3. Inextensible cable 43 comprises a traction contact arc that is formed with drive pulley 41, and further contact arcs that are formed with idle pulleys 42a-f; inextensible cable 43 causes idle pulleys 42a-f to rotate about respective axis.

By rotating drive pulley 31 and/or 41, inextensible cable 33 and/or 34 are pulled at traction point 34 and/or 44, and singular torques are produced by inextensible cable 33 and/or respectively at each idle pulley 32a-d and/or 42a/f. Parallelograms 10a and/or 10b receive/s therefore overall, multiplied torque/s that is/are the sum of such respective singular produced, respectively, at idle pulleys 32a/d and/or 42b/e. The overall torque/s cause/s translational movement/s of arm 2d and/or 4d. This/these movement/s are described by angle/s $\beta$ and/or $\gamma$, which represent, respectively, the two degrees of freedom of mechanism 10c. In particular, angle $\gamma$ describes the movement of arm 4d with respect to arm 2d.

Furthermore, two couples of deflecting pulleys 38a-b and 48a-b are rotatably arranged about respective axis 39a-b and 49a-b parallel to the axis of idle pulleys 32a-d and 47a/f; deflecting pulleys 38a-b and 48a-b serves to keep cable 33 and 43 in contact respectively with idle pulley 32c and 42d during the movement of mechanism 10c.

Cable 43 is preferably guided to target mechanism 10b by a crossing portion of the routing, or crossing-routing, through mechanism 10a. In this case, crossing routing provides contact arcs of cable 43 at idle pulleys 42a and 42f. The number and the diameter of the idle pulleys that belong to a crossing routing, as well as the contact arcs, can be defined such that an overall torque is generated at mechanism 10a by cable 43 by crossing mechanism 10a. This overall torque is the sum of torques generated at pulleys 42a and 42f. In this case drive pulley 41 and cable 43 collaborate with drive pulley 31 and cable 33 to actuate mechanism 10a. In alternative, the number and the diameter of the idle pulleys of a crossing routing, as well as the contact arcs may be chosen to obtain a crossing routing, in which such sum is zero, and the crossing of cable 43 through mechanism 10a has no effect on mechanism 10a actuation. The two degrees of freedom are in this case actuated independently with respect to each other.

With reference to figures 5, 8 and 9, three devices 50, 60 and 70 are described, which use the distribute torque actuation technique, according to the invention, for actuating one-degree-of-freedom pantograph mechanism 11 of figure 1B.

In particular device 50 of figure 5 comprises:

- a drive pulley 31 connected to an actuator (not shown) that is integral to fixed link 3; the actuator creates a rotational movement of drive pulley 31 about axis 35;
- two idle pulleys 32a-b that are coaxially arranged at revolute joints 37a-b which form a subset of revolute joint of mechanism 11; device 50 has therefore one idle pulley more than the number of degrees of freedom (one) of actuated mechanism 11;
- an inextensible cable 33 that has a traction end 34 connected at a peripheral point of drive pulley 31 and a further end 36, opposite to said traction end 34, that is connected at a point of arm 2b of parallelogram 11. Inextensible cable 33 comprises a traction contact arc that is formed with drive pulley 31, and further contact arcs that are formed with idle pulleys 32a-b; inextensible cable 33 causes idle pulleys 32a-b to rotate about respective axis.

By rotating drive pulley 31, inextensible cable 33 is pulled at traction point 34 and singular torques are produced by inextensible cable 33 at each idle pulley 32 a-b. Mechanism 11 receives therefore an overall, multiplied torque that is the sum of such singular torques. In other words, the overall torque acting on mechanism 11 is distributed on two revolute joint 37a-b. The overall torque causes a rotation of link 5 about remote centre of rotation 9, this movement being described by angle θ whose vertex is remote centre of rotation 9; angle θ represents the only degree of freedom of mechanism 11.

Taking equation 1] into account, the ratio R between the torque an actuator provides at drive pulley 31, and the corresponding torque received by mechanism 11, can be written:

$$ R = \frac{r_1}{r_a + r_b} = \frac{r_1}{r_{eq}} \qquad\qquad [3] $$

where

- $r_1$ is the radius of drive pulley 31,
- $r_a$, $r_b$, are the radiuses of idle pulleys 32a-b,
- $r_{eq}$ is the equivalent radius of an idle pulley 22 of prior art device 20b of figure 1A.

Equation [3] means that device 50 can be reduced to an equivalent device 20a (figure 1A) that is actuated by the technique according to the prior art, in which only one idle pulley 22 is provided, whose (equivalent) radius is equal to the sum of the radiuses of two idle pulleys 32a-b. By using relatively small idle pulleys 32a-b distributed at revolute joints 37a-b of mechanism 11, it is possible to achieve the same torque reduction that may be obtained by using a cumbersome idle pulley 22, located at the first revolute joint 26, integral to fixed link 3.

Similarly to device 30 of figure 3, In the case of device 50, where two idle pulleys are provided, rotational stiffness is four times the stiffness of an equivalent device that is actuated by the prior art technique as in figure 1A, provided that all idle pulleys 32 a-b have the same radius.

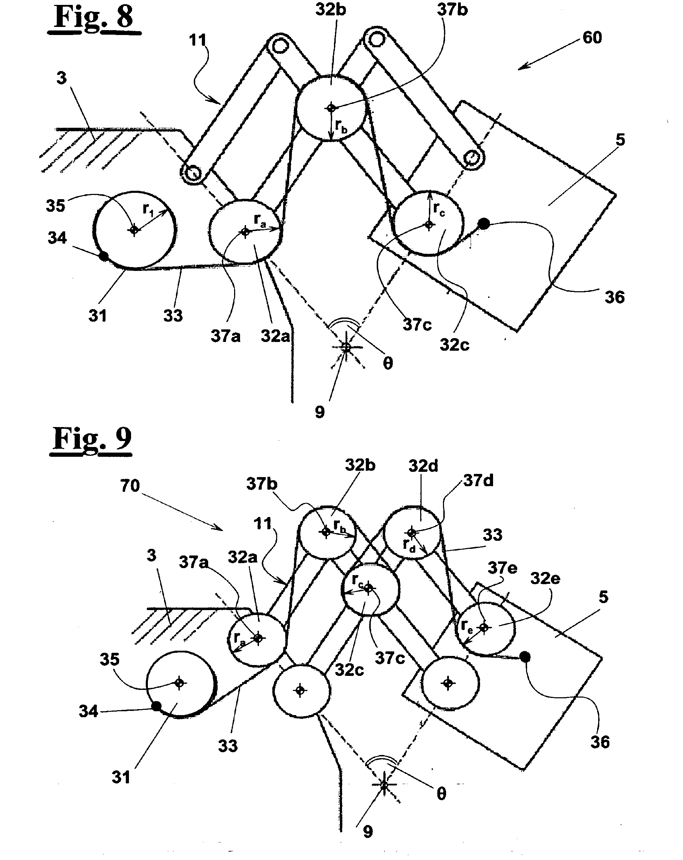

Referring now to figure 8, a device 60 comprises:

- a drive pulley 31 connected to an actuator (not shown) that is integral to fixed link 3; the actuator creates a rotational movement of drive pulley 31 about axis 35;

- three idle pulleys 32a-c that are coaxially arranged at revolute joints 37a-c of a subset of revolute joint of mechanism 11; device 60 has therefore two idle pulley more than the number of degrees of freedom (one) of actuated mechanism 11;
- an inextensible cable 33 that has a traction end 34 connected at a peripheral point of drive pulley 31 and a further end 36, opposite to said traction end 34, that is connected at a point of second link 5. Inextensible cable 33 comprises a traction contact arc that is formed with drive pulley 31, and further contact arcs that are formed with idle pulleys 32a-c; inextensible cable 33 cause idle pulleys 32a-c to rotate about respective axis.

By rotating drive pulley 31, inextensible cable 33 is pulled at traction point 34 and singular torques are produced by inextensible cable 33 at each idle pulley 32 a-c. Mechanism 11 receives therefore an overall, multiplied torque that is the sum of such singular torques. In other words, the overall torque acting on mechanism 11 is distributed on three revolute joint 37a-c. The overall torque causes a rotation of link 5 about remote centre of rotation 9, this movement being described by angle $\theta$ whose vertex is remote centre of rotation 9; angle $\theta$ represents the only degree of freedom of mechanism 11.

Taking equation [1] into account, the ratio R between the torque an actuator provides at drive pulley 31, and the corresponding torque received by mechanism 11, can be written:

$$R = \frac{r_1}{r_a + r_b + r_c} = \frac{r_1}{r_{eq}} \qquad [4]$$

where

- $r_1$ is the radius of drive pulley 31,
- $r_a$, $r_b$, $r_c$ are the radiuses of idle pulleys 32a-c,
- $r_{eq}$ is the equivalent radius of an idle pulley 22 of prior art device 20b of figure 1A

Equation [4] means that device 60 can be reduced to an equivalent device 20b (figure 1A) that is actuated by the technique according to the prior art, in which only one idle pulley 22 is provided, whose (equivalent) radius is equal to the sum of the radiuses of three idle pulleys 32a-c. By using relatively small idle pulleys 32a-b distributed at revolute joints 37a-b of mechanism 11, it is possible to achieve the same torque reduction that may be obtained by using a cumbersome idle pulley 22, located at the first revolute joint 26, integral to fixed link 3.

Similarly to device 30 and 40 of figure 3 and 4, In the case of device 60, where three idle pulleys are provided, rotational stiffness is nine times the stiffness of an equivalent device that is actuated by the prior art technique as in figure 1A, provided that all idle pulleys 32a-c have the same radius.

Referring now to figure 9, a device 70 comprises:

- a drive pulley 31 connected to an actuator (not shown) that is integral to fixed link 3; the actuator creates a rotational movement of drive pulley 31 about axis 35;
- five idle pulleys 32a-e, which are coaxially arranged at revolute joints 37a-e of a subset of revolute joint of mechanism 11; device 70 has therefore four idle pulley more than the number of degrees of freedom (one) of actuated mechanism 11;
- an inextensible cable 33 that has a traction 34 end connected at a peripheral point of drive pulley 31 and a further end 36, opposite to said traction end 34, that is connected at a point of second link 5. Inextensible cable 33 comprises a traction contact arc that is formed with drive pulley 31, and further contact arcs that are formed with idle pulleys 32a-e, causing a rotation of idle pulleys 32a-d about the respective axis, and a rotation of pulley 32e about its own axis, together with link 5;

By rotating drive pulley 31, inextensible cable 33 is pulled at traction point 34 and singular torques are produced by inextensible cable 33 at each idle pulley 32 a-e. Mechanism 11 receives therefore an overall, multiplied torque that is the sum of such singular torques. In other words, the overall torque acting on mechanism 11 is distributed on two revolute joint 37a-e. The overall torque causes a rotation of link 5 about remote centre of rotation 9, this movement being described by angle $\theta$ whose vertex is remote centre of rotation 9; angle $\theta$ represents the only degree of freedom of mechanism 11.

Equations [2], [3] and [4], can be generalized to case of n idle pulleys; the ratio R between the torque an actuator provides at drive pulley 31, and the corresponding torque received by mechanism 11, can be written:

$$R = \frac{r_1}{\sum_{i=1}^{n+1} r_i} = \frac{r_1}{r_{eq}} \qquad [5]$$

where, in the case of device 70:

- n = 5
- $r_1$ is radius of drive pulley 31,
- $r_i$ are the radiuses of the idle pulleys 32a-e,
- $r_{eq}$ is the equivalent radius of an idle pulley 22 of prior art device 20b of figure 1A.

According to equation [5] a device that has n idle pulleys can b reduced to an equivalent device 20a equivalent (figure 1A) that is actuated according to the prior art, in which only one idle pulley 22 is provided, whose (equivalent) radius is equal to the sum of the radiuses of the n idle pulleys, of the five idle pulleys 32a-e in the case of device 70. By using relatively small idle pulleys 32a-b distributed at revolute joints 37a-b of mechanism 11, it is possible to achieve the same torque reduction that may be obtained by using a cumbersome idle pulley 22, located at the first revolute joint 26, integral to fixed link 3.

The rotational stiffness of a device that is actuated by the technique according to the invention, $n^2$ times the rotational stiffness offered by an equivalent device 20, which is actuated according to the prior art of figure 1A, provided that all the idle pulleys have the same radius. In particular, the rotational of figure 70 is twenty-five times the rotational stiffness of equivalent, conventionally actuated device 20 (figure 1A).

The difference between the above-described exemplary embodiments consists mainly in the number of idle pulleys and in the selection of the subset of revolute joint/s among the revolute joints of actuated mechanism 11.

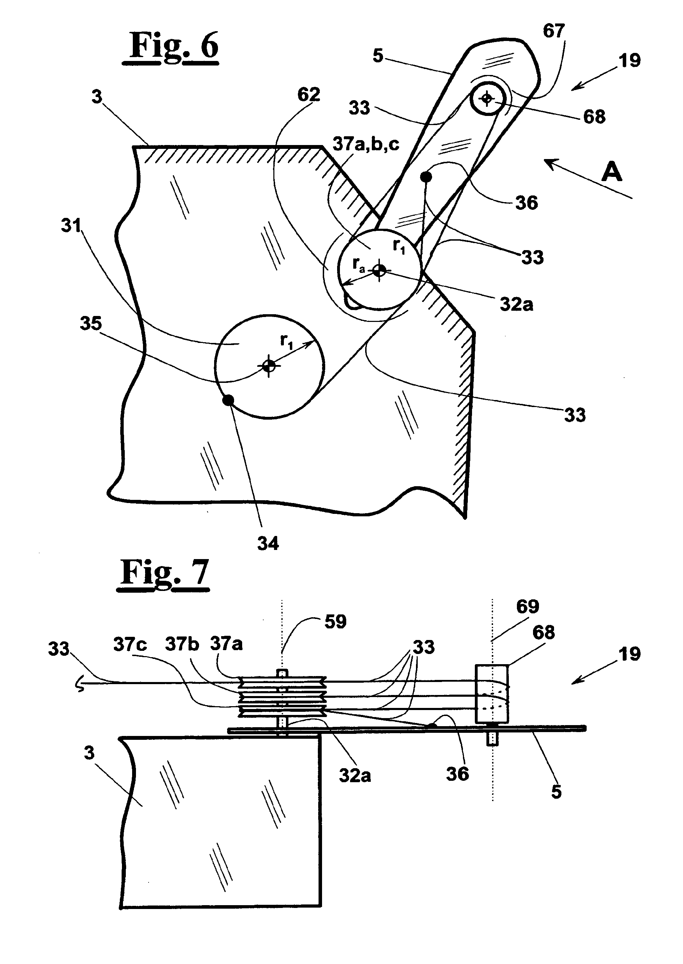

With reference to figures 6 and 7, a device 19 is shown for actuating the rotation of a mobile rigid link 5 about an axis integral to a fixed rigid link 3, i.e. for actuating a simple one-degree-of-freedom mechanism comprising a revolute joint 32a. Device 19 comprises

- a drive pulley 31 connected to an actuator (not shown) that creates a rotational movement of drive pulley 31 about axis 35;
- three idle pulleys 37a-c that are coaxially arranged at revolute joint 32a device 19 and have, in particular, the same radius r. Device 19 has two idle pulley more than the number of degrees of freedom (one) of actuated mechanism;
- a deflecting pulley 68 rotatably arranged preferably with its axis 69 parallel to axis 59 of revolute joint 32a, and at a prefixed distance from revolute joint 32a;
- an inextensible cable 33 that has a traction end 34 connected at a peripheral point of drive pulley 31 and a further end 36, opposite to said traction end 34, that is connected at a point of link 5; inextensible cable 33 forms three redundant arcs 62 about each idle pulley 32a-c, which are alternate with deflecting arcs 67 cable 33 forms about deflecting pulley 68; inextensible cable 33 causes idle pulleys 32a to rotate about its axis 59. By rotating drive pulley 31, inextensible cable 33 is pulled at traction point 34 and singular torques are produced by inextensible cable 33 at each idle pulley 32 a-c; revolute joint 37a receives therefore an overall, multiplied torque that is the sum of such singular torques. The overall torque causes a rotation of link 5 about axis 59 or revolute joint 37a. Equation [4] applies to device 19 with the same meaning of the symbols, where equivalent device differs from device 19
- for having one pulley 22 instead of pulley 32a-c, the radius of pulley 22 being three times the radius of idle pulleys 32a-c.

Obviously, a device may also be provided for actuating a mechanism comprising more than one revolute joints, at one of which a plurality of idle pulleys are arranged, according to the invention.

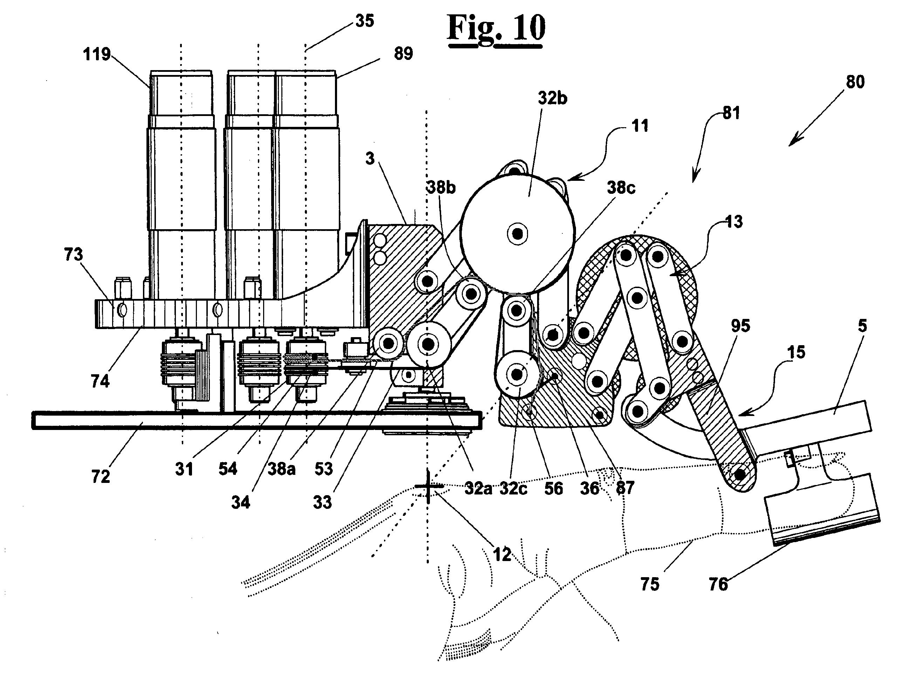

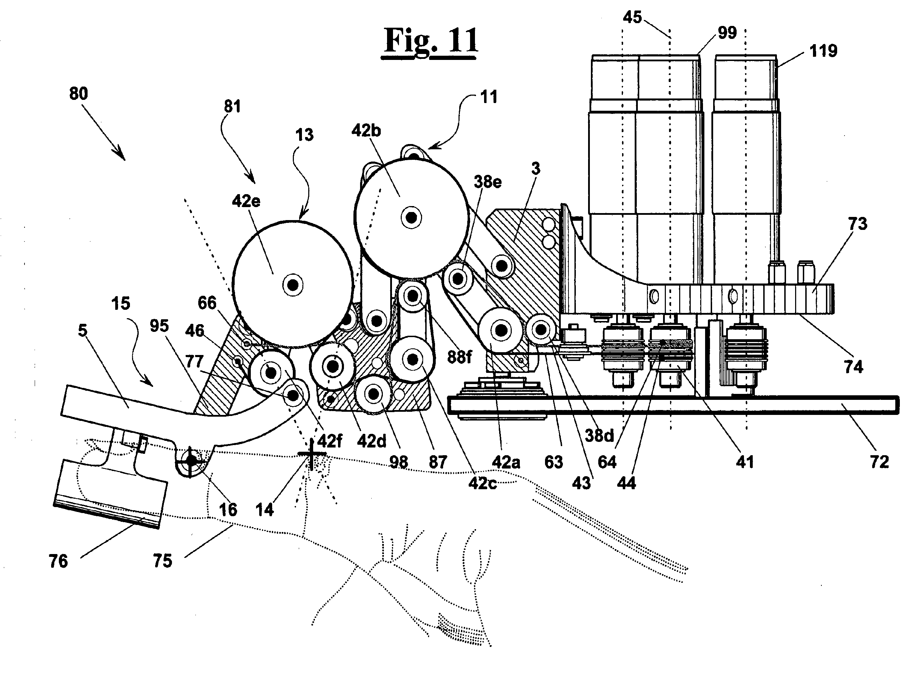

Figures 10 and 11 show two opposite perspective views of a hand finger exoskeleton 80 that comprises:

- a first rigid link 3 that, in use, is fastened to the palm of the hand, not shown;
- three mobile rigid links 87, 95 and 5, which respectively correspond to proximal, medial and distal phalanxes of finger 75; in particular, link 5 has an anatomical support 76 for the distal phalanx.

Exoskeleton 80 comprises furthermore a two-degrees-of-freedom mechanism 81, which in turn comprises three simple mechanisms that are connected in series:

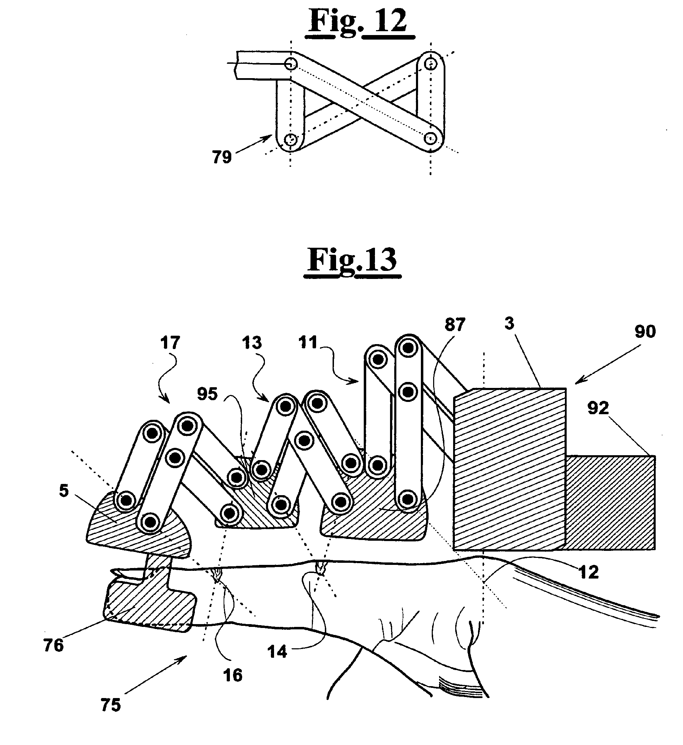

- a proximal pantograph RCRM 11 that connects together rigid links 3 and 87 and implements the proximal finger joint;
- a medial pantograph RCRM 13 that connects together rigid links 87 and 95 and implements the medial finger joint;
- a distal crossed-parallelogram mechanism 15 that that connects together rigid links 95 and 5 and implements distal finger joint; a crossed-parallelogram mechanism 79 is shown more in detail in figure 12.

Since the distal phalanx of a finger cannot in general be moved independently from the medial phalanx, the medial finger joint and the distal finger joint are implemented by a system of mechanisms 13 and 15 which has globally one degree of freedom.

The proximal, medial and distal joints of finger 75 allow flexion/extension movements of respective phalanxes of the finger 75. To obtain a kinematics that is as far as possible isomorphic to phalanx kinematics, the centres of rotation 12, 14 and 16 of mechanisms 11, 13 ad 15 coincide respectively with physiological flexional joints of finger 75. This is possible only if no cumbersome parts of the actuating devices are provided close to the centres of rotation.

To this purpose, mechanisms 11, 13 and 15 are actuated by the distribute torque actuation technique, according to the invention.

In particular, proximal mechanism 11 (figure 10) is actuated by means of:

- a drive pulley 31 that is rotatably arranged about vertical axis 35,
- an actuator 89 that is connected to pulley 31, such that pulley 31 can rotate about axis 35;
- three idle pulleys 32a-c, which are coaxially arranged at revolute joints of a subset of revolute joints of mechanism 11 that are normal to axis 35 of drive pulley 31 and to the plane where mechanism 11 extends;
- two inextensible cables 33 and 53 that have respective traction ends 34 and 54 connected at peripheral points of drive pulley 31, and respective further ends 36 and 56, opposite to said traction ends, that are connected at two points of link 87. Inextensible cables 33 and 53 comprise respective traction contact arcs about drive pulley 31, and further contact arcs that are formed with idle pulleys 32a-c;
- three deflecting pulleys 38a-c, which serves to keep cables 83a-83b in contact with each idle pulley 32a-c.

Opposite rotations of drive pulley 31 cause opposite rotations of link 87 with respect to link 3 about remote centre of rotation 12, which is aligned with the proximal joint of the finger: such opposite movements corresponds to bending and extension movements of the proximal phalanx of finger 75.

Medial and distal mechanisms 13 and 15 (figure 11) are actuated together by means of:

- a drive pulley 41 that is rotatably arranged about vertical axis 45;
- an actuator 99 that is connected to pulley 41 such that pulley 41 can rotate about axis 45;
- three idle pulleys 42a-c, which are coaxially arranged at revolute joints of a subset of revolute joints of mechanism 13 that are normal to axis 41 and to the plane where mechanism 13 and 15 extend;
- two inextensible cables 43 and 63 that have respective traction ends 44 and 64 connected at respective peripheral points of drive pulley 41, and respective further ends 46 and 66, opposite to said traction ends, that are connected at two points of link 95. Inextensible cables 43 and 63 comprise respective traction contact arcs about drive pulley 41, and further contact arcs that are formed with idle pulleys 42a-c;
- three idle pulleys 32d-f, that are coaxially arranged at the same revolute joints of mechanism 11 where idle pulleys 32a-c are coaxially arranged (figure 10); pulleys 32d-f allow cables 43 and 63 to cross mechanism 11 according to a neutral mode crossing, i.e. in such a way that no interference is possible between the movement of cables 43 and 63 and the movement of mechanism 11;
- four deflecting pulleys 38d-f and 98, which serves to keep cables 43 and 63 in contact with each idle pulley 42a-c and 32d-f.

Opposite rotations of drive pulley 41 cause opposite rotations of link 95 with respect to link 87 about remote centre of rotation 14, which is aligned with the proximal joint of the finger: such opposite movements corresponds to bending and extension movements of the medial phalanx of finger 75. Due to rotatable arrangement of mechanism 13 and mechanism 15 at revolute joint 77, opposite rotations of link 95 cause in turn opposite rotation of link 5 with respect to link 95 about centre of rotation 16, which is aligned with the distal joint of the finger: such opposite movements corresponds to bending and extension movements of the distal phalanx.

Finally, an actuator 119 is also provided for actuating the mechanism, not shown, which implements opposite abduction/adduction movements of finger 75 with respect to the metacarpus of the hand. Like actuators 89 and 99, actuator 119 it is integral to support 73. Support 73 has a base 74 where holes are made, not shown, which allow passage of rotating shafts of actuators 89, 99 and 119. Base 74 is connected to platform 72 which, in use, is fastened to the wrist of an user by means of a bracelet, not shown.

With respect to the device described in US5912658, exoskeleton 80 has the following advantages:

- bulky parts are located only on the back side of the hand and no encumbrance is provided beside the finger, which assists the abduction-adduction movements,
- size reduction of the actuators and of the total weight of the device, due to the higher transmission ratios that are allowed by the cable transmission according to the invention, in particular by the active mode crossing;
- improvement of the transmission stiffness, due to the higher transmission ratios and to the steps of moving the cables in active mode,
- elimination of the circular guide, which is a heavy and expensive component.

Figure 13 shows a three-degrees-of-freedom mechanism 90, which can be used instead in a hand finger exoskeleton. Mechanism 90 comprises

- a first link 3 that, in use, is fastened to the palm of the hand, not shown,
- three links 87, 95 and 5, which respectively correspond to proximal, medial and distal phalanxes of finger 75; in particular, link 5 has an anatomical support 76 for the distal phalanx;
- three RCRM 11, 13, 17, that are respectively arranged between links 3 and 87, 87 and 95, 95 and 5.

RCRM 11, 13, 17 are used for respectively implementing the proximal, medial and distal, flexo-extension joints of finger 75, and have respective remote centres of rotation 12, 14, 16 that are substantially coincident to corresponding flexo-extension joints axis of finger 75. A substantial isomorphismus is therefore obtained between the movements of three-degrees-of-freedom mechanism 90 and the movements of the true joints. This is possible only if mechanisms and actuating means are chosen which do not provide bulky components close to the remote centre of rotation, which is made possible by the technique according to the invention.

Link 3 is connected to a support 92 for the actuators that, in use, is fastened to the wrist of an user, not shown, like in exoskeleton 80 of figures 10 and 11.

The foregoing description of specific embodiments will so fully reveal the invention according to the conceptual point of view, so that others, by applying current knowledge, will be able to modify and/or adapt for various applications such embodiments without further research and without parting from the invention, and it is therefore to be understood that such adaptations and modifications will have to be considered as equivalent to the specific embodiments. The means and the materials to realise the different functions described herein could have a different nature without, for this reason, departing from the field of the invention. It is to be understood that the phraseology or terminology employed herein is for the purpose of description and not of limitation.

**Claims**

1. A method for actuating a mechanism (10a,10c,11,81,90), said mechanism having a predetermined number of degrees of freedom, said mechanism comprising a plurality of revolute joints, each revolute joint having a rotation axis, said mechanism (10a,10c,11,81,90) connected to a first rigid link (3) and a second rigid link (5), and said mechanism (10a,10c,11,81,90) adapted to impose a prefixed relative movement between said first rigid link (3) and said second rigid link (5), said method comprising the steps of:

   - selecting a subset of one or more revolute joint/s (37a-e, 47b-c) among said plurality of revolute joints of said mechanism (10a,-10c,11,81,90);
   - rotatably arranging respective idle pulleys (32a-e, 42a-f) about the axis of said revolute joint/s (37a-e, 47b-c) of said subset;
   - arranging an inextensible cable (33,43) according to a prefixed routing, said routing extending between a traction point (34,44) on said cable upstream of said first idle pulley (32a, 42a) and a terminal point (36,46) fixed on one of said links (3,5) or on said mechanism (10a,10c,11,81,90); and said routing comprising respective contact arcs of said inextensible cable (33,43) about said idle pulleys (32a-e, 42a-f); **characterized in that** the number of idle pulleys (32a-e, 42a-f) that are arranged at said revolute joint/s (37a-e, 47b-c) of said subset is greater than the number of said degree/s of freedom and **in that** said routing is configured in such a way that for a given movement of said mechanism (10a,10c,11,81,90) all said contact arcs increase in length, or they all decrease in length, such that by pulling said inextensible cable (33,43) at said traction point (34,44) a multiplied torque is produced at each idle pulley, said multiplied torque being the sum of singular torques produced by said inextensible cable (33,43), said multiplied torque causing a relative movement between said links (3,5).

2. A method according to claim 1, wherein a first revolute joint (37a) of said subset has its respective rotation axis fixed with respect to said first link (3).

3. A method according to claim 1, wherein said subset comprises at least two revolute joints, and the distance between any couple of consecutive revolute joints (37a-e, 47b-c) of said subset is unchanged during any movement of said mechanism (10a,10c,11,81,90).

4. A method according to claim 1, wherein said subset of one or more revolute joint/s is a first subset of one or more revolute joint/s, in which said inextensible cable, said respective routing, said traction point and said terminal point are respectively a first inextensible cable (33,43), a first routing a first traction point (34,44) and a first terminal point (36,46), the following further steps are provided:

- selecting a second subset of one or more revolute joint/s among said plurality of revolute joints of said mechanism (81);
- rotatably arranging respective idle pulleys (32a-c,42a-f) about the axis of said revolute joint/s of said second subset;
- arranging a second inextensible cable (53,63) according to a prefixed second routing, said second routing extending between a second traction point (54,64) on said second cable upstream of said first idle pulley (32a, 42a) and a second terminal point (36,46) fixed on one of said links (3,5) or on said mechanism (81); and said second routing comprising respective contact arcs of said second inextensible cable (53,63) partially wound about said idle pulleys (32a-c, 42a-f);
wherein the number of idle pulleys (32a-c, 42a-f) that are arranged at said revolute joint/s of said second subset is greater than the number of said degree/s of freedom,
such that said mechanism (81) is bilaterally actuated by pulling said first and said second inextensible cables (53,63) at said respective first and second traction points (54,64), i.e. opposite torques/forces are selectively applied to said mechanism (81) which causes corresponding opposite relative movements between said first and said second links (3,5).

5. A method according to claim 4, wherein a first revolute joint of said second subset has its respective rotation axis fixed with respect to said first link (3).

6. A method according to claim 4, wherein

- said first and said second subsets of one or more revolute joint/s coincide with each other,
- said first and said second inextensible cables (53,63) form on each of said pulleys (32a-c, 42a-f) respective first and second contact arcs such that the first contact arcs vary in an opposite way with respect to said second contact arcs during said movements of said mechanism (81), i.e. when said first contact arcs increase, said second contact arcs decrease by a same length.

7. A method according to claim 1, wherein a plurality of idle pulleys (32a-c are rotatably arranged about said axis of a revolute joint (37a) selected among said revolute joint/s of said subset, and a deflecting pulley (68) is arranged preferably with its axis (69) parallel to the axis of said selected revolute joint (37a) at a prefixed distance from said selected revolute joint (37a), said inextensible cable (33) forming redundant contact arcs (62) with each idle pulley of said plurality of idle pulleys (32a-c), and deflection arcs (67) about said deflecting pulley (68), said deflection arcs (67) alternate to said redundant contact arcs (62) along said inextensible cable (33).

8. A method according to claim 1, wherein said mechanism is a serial mechanism (10c,81,90) having at least two-degrees-of-freedom and comprises a proximal mechanism part (10a,11) and a distal mechanism part (10b,15,17), wherein a cable portion of said routing that moves the distal mechanism part (10b,15,17) is wound also on idle pulleys (42a, 42f, 42a-c) of said proximal mechanism part (10a,11) such that said proximal mechanism part (10a,11) is unaffected by said cable portion.

9. A method according to claim 8, wherein:

- said cable portion of said routing that moves said distal mechanism part (10b,15,17) and that is wound about the idle pulleys (42a, 42f, 42a-c) of said proximal mechanism part (10a,11) have an overall length unchanged during any movement of said proximal mechanism part (10a,11);
- the radiuses of said idle pulleys (42a, 42f, 42a-c) of said proximal mechanism part (10a,11) on which said cable portion is wound have opposite sign depending on whether said respective contact arcs increase or decrease in length during a movement of said proximal mechanism part (10a,11), and said radiuses have sum equal to zero.

**10.** A mechanism (10a,10c,11,81,90) with a predetermined number of degrees of freedom, said mechanism comprising

- a plurality of revolute joints, each revolute joint having a rotation axis, said mechanism (10a,10c,11,81,90) connected to a first rigid link (3) and a second rigid link (5), and said mechanism (10a,10c,11,81,90) adapted to impose a prefixed relative movement between said first rigid link (3) and said second rigid link (5),
- respective idle pulleys (32a-e, 42a-f) arranged about the axis of a subset of one or more revolute joint/s (37a-e, 47b-c) of said plurality of revolute joints of said mechanism (10a,10c,11,81,90);
- an inextensible cable (33,43) arranged according to a prefixed routing, said routing extending between a traction point (34,44) on said cable upstream of said first idle pulley (32a, 42a) and a terminal point (36,46) fixed on one of said links (3,5) or on said mechanism (10a,10c,11,81,90); and said routing comprising respective contact arcs of said inextensible cable (33,43) about said idle pulleys (32a-e, 42a-f); **characterized in that** the number of idle pulleys (32a-e, 42a-f) that are arranged at said revolute joint/s (37a-e, 47b-c) of said subset is greater than the number of said degree/s of freedom **and in that** said routing is configured in such a way that for a given movement of said mechanism (10a,10c,11,81,90) all said contact arcs increase in length, or they all decrease in length, such that by pulling said inextensible cable (33,43) at said traction point (34,44) a multiplied torque is produced which is the sum of singular torques produced by said inextensible cable (33,43) at each idle pulley, said multiplied torque causing a relative movement between said links (3,5).

**11.** A mechanism according to claim 10, wherein said mechanism is selected from the group comprised of

- a remote centre of rotation mechanism based on a pantograph mechanism (11,81,90);
- a parallelogram mechanism (10a,10c).

**12.** A hand exoskeleton, comprising:

- a base link (3) arranged in use substantially integral to the back of a hand of a user,
- at least one finger exoskeleton (80), comprising a mechanism (81,90) having two or more degrees of freedom, said finger exoskeleton (80) comprising:
- a proximal link (87) connected to said base link (3) by means of a proximal remote centre of rotation mechanism (11), in particular a pantograph mechanism, which has a rotation axis (12) substantially aligned with the flexion/extension joint between the finger (100) proximal phalanx and the metacarpus,
- a medial link (95) connected to said proximal link (87) by means of a medial remote centre of rotation mechanism (13), in particular a pantograph mechanism, which has a rotation axis (14) substantially aligned with the flexion/extension joint between the finger (100) medial and proximal phalanges,

wherein at least one remote centre of rotation mechanism of said remote centre of rotation mechanisms (11,13) is a mechanism according to claim 10.

**13.** A hand exoskeleton according to claim 12, wherein said finger (100) mechanism (81) comprises a distal link (5) arranged in use in contact with the palm side of the distal phalanx of said finger (100), said distal link connected to said medial link (95) by means of a distal mechanism part (15,17) having one rotational degree of freedom, said distal link mechanism having a rotation axis (16) substantially aligned with the flexion/extension joint between the finger (100) distal and medial phalanges, said distal mechanism part (15,17) selected from the group comprised of:

- a remote centre of rotation mechanism (17), based on a pantograph mechanism, forming together with said proximal and medial mechanisms (11,13) a three-degrees-of-freedom mechanism (90) that is actuated by the method according to the claims 1 to 9.
- a simple crossed quadrilateral mechanism (15,79), actuated by a rotation of said medial link (95) with respect to said proximal link (87).

**14.** A hand exoskeleton according to claim 12 or 13, wherein

- said medial mechanism (13) is actuated by means of an inextensible cable (53,63) which forms contact arcs on said idle pulleys (42a-c) of said proximal mechanism (11), said cable producing in said idle pulleys (42a-c) of said proximal mechanism (11) a couple that has a non-zero resultant torque value during a movement of said medial mechanism (13), and/or
- said distal mechanism part (17) is actuated by means of a further inextensible cable having parts that are wound about said idle pulleys (42a-f) of said proximal and/or medial mechanism (11,13), said further cable producing at said idle pulleys (42a-f) of said medial and/or proximal mechanism (11) torques that have a non-zero resultant torque value during a movement of said distal mechanism part (17).

**Patentansprüche**

1. Ein Verfahren zum Betätigen eines Mechanismus (10a,10c,11,81,90), wobei der Mechanismus eine vorbestimmte Anzahl von Freiheitsgraden besitzt, wobei der Mechanismus eine Vielzahl von Drehgelenken besitzt und jedes Drehgelenk eine Drehachse hat, wobei der Mechanismus (10a,10c,11,81,90) mit einem ersten starren Verbindungsglied (3) und einem zweiten starren Verbindungsglied (5) verbunden ist, und wobei der Mechanismus (10a,10c,11,81,90) eingerichtet ist, um eine zuvor festgelegte Relativbewegung zwischen dem ersten starren Verbindungsglied (3) und dem zweiten starren Verbindungsglied (5) aufzuzwingen, wobei das Verfahren die folgenden Schritte aufweist:

   - Auswählen einer Teilmenge eines oder mehrerer Drehgelenks/Drehgelenke (37a-e,47b-c) aus der Vielzahl der Drehgelenke des Mechanismus (10a,10c,11,81,90),
   - drehbares Anordnen jeweiliger Laufrollen (32a-e,42a-f)um die Achse des/der Drehgelenks/Drehgelenke (37a-e,47b-c) der Teilmenge,
   - Anordnen eines nicht-ausstreckbaren Kabels (33,43) gemäß einer vorher festgelegten Wegstrecke, wobei die Wegstrecke sich zwischen einem Traktionspunkt (34,44) an dem Kabel stromauf der ersten Laufrolle (32a,42a) und einem Endpunkt (36,46), der an einem der Verbindungsglieder (3,5) oder an dem Mechanismus (10a,10c,11,81,90) befestigt ist, erstreckt, und wobei die Wegstrecke jeweilige Kontaktbögen des nicht-ausstreckbaren Kabels (33,43) um die Laufrollen (32a-e,42a-f) aufweist,
   **gekennzeichnet dadurch, dass** die Anzahl von Laufrollen (32a-e,42a-f), die an dem/den Drehgelenk/Drehgelenken (37a-e,47b-c) der Teilmenge angeordnet sind, größer ist als die Anzahl des/der Freiheitsgrades/Freiheitsgrade, und dadurch, dass die Wegstrecke so konfiguriert ist, dass bei einer vorgegebenen Bewegung des Mechanismus (10a, 10c, 11, 81, 90) alle die Kontaktbögen in ihrer Länge zunehmen, oder dass sie alle in ihrer Länge abnehmen, derart, dass durch Ziehen des nicht-ausstreckbaren Kabels (33,43) an dem Traktionspunkt (34,44) ein vervielfachtes Drehmoment an jeder Laufrolle erzeugt wird, wobei das vervielfachte Drehmoment die Summe von Einzel-Drehmomenten ist, die durch das nicht-ausstreckbare Kabel (33,43) erzeugt werden, wobei das vervielfachte Drehmoment eine relative Bewegung zwischen den Verbindungsgliedern (3,5) bewirkt.

2. Ein Verfahren gemäß Anspruch 1, wobei ein erstes Drehgelenk (37a) der Teilmenge seine jeweilige Drehachse bezüglich dem ersten Verbindungsglied (3) feststehend hat.

3. Ein Verfahren gemäß Anspruch 1, wobei die Teilmenge mindestens zwei Drehgelenke umfasst, und der Abstand zwischen irgend einem Paar von aufeinanderfolgenden Drehgelenken (37a-e,47b-c) der Teilmenge während irgendeiner Bewegung des Mechanismus (10a, 10c, 11, 81, 90) unverändert ist.

4. Ein Verfahren gemäß Anspruch 1, wobei die Teilmenge aus einem oder mehreren Drehgelenk/Drehgelenken eine erste Teilmenge eines oder mehrerer Drehgelenks/Drehgelenke ist, bei der das nicht-ausstreckbare Kabel, die jeweilige Wegstrecke, der Traktionspunkt und der Endpunkt jeweils ein erstes nicht-ausstreckbares Kabel (33,43), eine erste Wegstrecke, ein erster Traktionspunkt (34,44) und ein erster Endpunkt (36,46) sind, wobei die folgenden weiteren Schritte vorgegehen sind:

   - Auswählen einer zweiter Teilmenge eines oder mehrerer Drehgelenks/Drehgelenke aus der Vielzahl von Drehgelenken des Mechanismus (81),
   - drehbares Anordnen jeweiliger Laufrollen (32a-c, 42a-f) um die Achse des/der Drehgelenks/Drehgelenke der zweiten Teilmenge,
   - Anordnen eines zweiten nicht-ausstreckbaren Kabels (53, 63) gemäß einer vorher festgelegten zweiten Wegstrecke, wobei die zweite Wegstrecke sich zwischen einem zweiten Traktionspunkt (54, 64) an dem zweiten Kabel stromauf der ersten Laufrolle (32a, 42a) und einem zweiten Endpunkt (36,46), der an einem der Verbindungsglieder (3,5) oder an dem Mechanismus (81) befestigt ist, erstreckt, und wobei die zweite Wegstrecke jeweilige Kontaktbögen des zweiten nichtausstreckbaren Kabels (53, 63), die teilweise um die Laufrollen (32a-c, 42a-f) gewunden sind, aufweist,
   wobei die Anzahl von Laufrollen (32a-c, 42a-f), die an dem/den Drehgelenk/Drehgelenken der zweiten Teilmenge angeordnet sind, größer ist als die Anzahl des/der Freiheitsgrades/ Freiheitsgrade,
   derart, dass der Mechanismus (81) durch Ziehen der ersten und zweiten nicht-austreckbaren Kabel (53,63) an den jeweiligen ersten und zweiten Traktionspunkten (54, 64) bilateral betätigt wird, das heißt dass entgegengesetzte Drehmomente/Kräfte selektiv auf den Mechanismus (81) einwirken, die entsprechende entgegengesetzte Relativbewegungen zwischen den ersten und zweiten Verbindungsgliedern (3,5) bewirken.

**5.** Ein Verfahren gemäß Anspruch 4, wobei ein erstes Drehgelenk der zweiten Teilmenge seine jeweilige Drehachse bezüglich dem ersten Verbindunsglied (3) feststehend hat.

**6.** Ein Verfahren gemäß Anspruch 4, wobei

- die ersten und zweiten Teilmengen eines oder mehrerer Drehgelenks/Drehgelenke miteinander übereinstimmen,
- die ersten und zweiten nicht-austreckbaren Kabel (53, 63) an jeden der Laufrollen (32a-c, 42a-f) jeweilige erste und zweite Kontaktbögen bilden, derart, dass die ersten Kontaktbögen in einer entgegengesetzten Weise bezüglich den zweiten Kontaktbögen während den Bewegungen des Mechanismus (81) variieren, das heißt wenn die ersten Kontaktbögen zunehmen, die zweiten Kontaktbögen um dieselbe Länge abnehmen.

**7.** Ein Verfahren gemäß Anspruch 1, wobei eine Vielzahl von Laufrollen (32a-c) drehbar um die Achse eines Drehgelenks (37a) angeordnet sind, das aus dem/den Drehgelenk/ Drehgelenken der Teilmenge ausgewählt ist, und eine Umlenkrolle (68) vorzugsweise mit ihrer Achse (69) parallel zu der Achse des ausgewählten Drehgelenks (37a) in einer vorher festgelegten Entfernung von dem ausgewählten Drehgelenk (37a) angeordnet ist, wobei das nichtausstreckbare Kabel (33) redundante Kontaktbögen (62) mit jeder Laufrolle der Vielzahl von Laufrollen (32a-c), und Umlenkbögen (67) um die Umlenkrolle (68) bildet, wobei die Umlenkbögen (67) mit den redundanten Kontaktbögen (62) entlang dem nicht- ausstreckbaren Kabel (33) abwechseln.

**8.** Ein Verfahren gemäß Anspruch 1, wobei der Mechanismus ein serieller Mechanismus (10c, 81, 90) ist, der mindestens zwei Freiheitsgrade besitzt und einen proximalen Mechanismusteil (10a, 11) und einen distalen Mechanismusteil (10b, 15, 17) aufweist, wobei ein Kabelabschnitt der Wegstrecke, der den distalen Mechanismusteil (10b,15,17) bewegt, auch auf Laufrollen (92a, 42f, 42a-c) des proximalen Mechanismusteils (10a, 11) so aufgewickelt ist, dass der proximale Mechanismusteil (10a, 11) von dem Kabelabschnitt nicht beeinflusst wird.

**9.** Ein Verfahren gemäß Anspruch 8, wobei:

- der Kabelabschnitt der Wegstrecke, der den distalen Mechanismusteil (10b,15,17) bewegt, und der um die Laufrollen (42a, 42f, 42a-c) gewickelt ist eine Gesamtlänge haben, die während irgendeiner Bewegung des proximalen Mechanismusteils (10a, 11) unverändert ist,
- die Radien der Laufrollen (42a, 42f, 42a-c) des proximalen Mechanismusteils (10a, 11), auf den der Kabelabschnitt gewickelt ist, entgegengesetzte Vorzeichen haben in Abhängigkeit davon, ob die jeweiligen Kontaktbögen in der Länge während einer Bewegung des proximalen Mechanismusteils (10a, 11) zunehmen oder abnehmen, und die Radien eine Summe gleich Null haben.

**10.** Ein Mechanismus (10a, 10c, 11, 81, 90) mit einer vorbestimmten Anzahl von Freiheitsgraden, wobei der Mechanismus aufweist:

- eine Vielzahl von Drehgelenken, wobei jedes Drehgelenk eine Drehachse besitzt, der Mechanismus (10a, 10c, 11, 81, 90) mit einem ersten starren Verbindungsglied (3) und einen zweiten starren Verbindungsglied (5) verbunden ist, und der Mechanismus (10a, 10c, 11, 81, 90) eingerichtet ist, um eine vorher festgelegte Relativbewegung zwischen dem ersten starren Verbindungsglied (3) und dem zweiten starren Verbindungsglied (5) aufzuzwingen,
- jeweilige Laufrollen (32a-e, 42a-f), die um die Achse einer Teilmenge von einem oder mehreren Drehgelenk/Drehgelenken (37a-e, 47b-c) der Vielzahl von Drehgelenken des Mechanismus (10a, 10c, 11, 81, 90) angeordnet sind,
- ein nicht-austreckbares Kabel (33, 43), das gemäß einer zuvor festgelegte Wegstrecke angeordnet ist, wobei sich die Wegstrecke zwischen einem Traktionspunkt (34,44) an dem Kabel stromauf der ersten Laufrolle (32a, 42a) und einem Endpunkt (36, 46), der an einem der Verbindungsglieder (3, 5) oder an dem Mechanismus (10a, 10c, 11, 81, 90) befestigt ist, erstreckt, und die Wegstrecke jeweilige Kontaktbögen des nichtausstreckbaren Kabels (33,43) um die Laufrollen (32a-e, 42a-f) ausweist,
**dadurch gekennzeichnet**, das die Anzahl von Laufrollen (32a-e, 42a-f), die an dem/den Drehgelenk/Drehgelenken (37a-e, 47b-c) der Teilmenge angeordnet sind, größer ist als die Anzahl des/der Freiheitsgrads/Freiheitsgrade, und dadurch, dass die Wegstrecke so konfiguriert ist, dass bei einer gegebenen Bewegung des Mechanismus (10a, 10c, 11, 81, 90) alle Kontaktbögen in der Länge zunehmen oder alle in der Länge abnehmen, derart, dass durch Ziehen des nicht-ausstreckbaren Kabels (33, 43) an dem Traktionspunkt (34,44) ein vervielfachtes Drehmoment erzeugt wird, das die Summe von Einzel-Drehmomenten ist, die durch das nicht-ausstreckbare Kabel (33, 43) an jeder Laufrolle erzeugt werden, wobei das vervielfachte Drehmoment eine Relativbewegung zwischen den Verbindungsgliedern (3,5) bewirkt.

11. Ein Mechanismus gemäß Anspruch 10, wobei der Mechanismus aus der Gruppe ausgewählt ist, die umfasst

- einen Fern-Drehzentrumsmechanismus basierend auf einem Pantographmechanismus (11, 81, 90),
- einen Parallelogrammmechanismus (10a, 10c).

12. Ein Hand-Exoskelet, mit:

- einem Basis-Verbindungsglied (3), das bei Verwendung im Wesentlichen integral mit der Rückseite einer Hand eines Anwenders angeordnet ist,
- mindestens einem Finger-Exoskelet (80) mit einem Mechanismus (81,90) mit zwei oder mehr Freiheitsgraden, wobei das Finger-Exoskelet (80) aufweist:
- ein proximales Verbindungglied (87), dass mit dem Basis-Verbindungsglied (3) mittels eines proximalen Fern-Drehzentrumsmechanismus (11) verbunden ist, insbesondere einem Pantographmechanismus, der eine Drehachse (12) besitzt, die im Wesentlichen mit dem Flexions-/Extensionsgelenk zwischen dem proximalen Glied des Fingers (100) und der Mittelhand ausgerichtet ist,
- ein mediale Verbindungsglied (95), das mit dem proximalen Verbindungsglied (87) mittels eines medialen Fern-Drehzentrumsmechanismus (13), insbesondere einem Pantographmechanismus, verbunden ist, der eine Drehachse (14) hat, die im Wesentlichen mit dem Flexions-/Extensionsgelenk zwischen den medialen und proximalen Gliedern des Fingers (100) ausgerichtet ist,
wobei mindestens ein Fern-Drehzentrumsmechanismus/der Fern-Drehzentrumsmechanismen (11, 13) ein Mechanismus gemäß Anspruch 10 ist.

13. Ein Hand-Exoskelet gemäß Anspruch 12, wobei der Mechanismus (81) des Fingers (100) ein distales Verbindungsglied (5) aufweist, das bei Verwendung in Kontakt mit der Handflächenseite des distalen Glieds des Fingers (100) ist, wobei das distale Verbindungsglied mit dem medialen Verbindungsglied (95) mittels einem distalen Mechanismusteil (15,17) verbunden ist, das einen Dreh-Freiheitsgrad besitzt, wobei der distale Verbindungsmechanismus eine Drehachse (16) besitzt, die im wesentlichen mit dem Flexions-/Extensionsgelenk zwischen den distalen und medialen Gliedern des Fingers (100) ausgerichtet ist,
wobei der distale Mechanismusteil (15,17) aus der Gruppe ausgewählt ist, die umfasst:

- einen Fern-Drehzentrumsmechanismus (17), basierend auf einen Pantographmechanismus, der zusammen mit den proximalen und medialen Mechanismen (11, 13) einen Mechanismus (90) mit drei Freiheitsgraden bildet, der durch das Verfahren gemäß den Ansprüchen 1 bis 9 betätigt wird,
- einen einfache gekreuzten Viereckmechanismus (15,79), der durch eine Drehung des medialen Verbindungsglieds (95) bezüglich dem proximalen Verbindungsglied (87) betätigt wird.

14. Ein Hand-Exoskelet gemäß Anspruch 12 oder 13, wobei

- der mediale Mechanismus (13) mittels eines nicht-ausstreckbaren Kabels (53,63) betätigt wird, das Kontaktbögen an den Laufrollen (42a-c) des proximalen Mechanismus (11) bildet, wobei das Kabel in den Laufrollen (42a-c) des proximalen Mechanismus (11) ein Paar bildet, das einen resultierenden Drehmomentwert ungleich Null während einer Bewegung des medialen Mechanismus (13) besitzt, und/oder
- der distale Mechanismusteil (17) mittels eines weiteren nicht-ausstreckbaren Kabels betätigt wird, das Teile besitzt, die um die Laufrollen (42a-f) des proximalen und/oder des medialen Mechanismus (11, 13) gewickelt sind, wobei das weitere Kabel an den Laufrollen (42a-f) des medialen und/oder des proximalen Mechanismus (11) Drehmomente erzeugt die einen resultierenden Drehmomentwert ungleich Null haben, während einer Bewegung des distalen Mechanismusteil (17) haben.

**Revendications**

1. Procédé d'actionnement d'un mécanisme (10a, 10c. 11, 81, 90), ledit mécanisme ayant un nombre prédéterminé de degrés de liberté, ledit mécanisme comprenant une pluralité d'articulations simples, chaque articulation simple ayant un axe de rotation, ledit mécanisme (10a, 10c, 11, 81, 90) étant relié à une première liaison rigide (3) et une seconde liaison rigide (5), et ledit mécanisme (10a, 10c, 11, 81, 90) étant conçu pour imposer un mouvement relatif prédéfini entre ladite première liaison rigide (3) et ladite seconde liaison rigide (5), ledit procédé comprenant les étapes consistant à :

sélectionner un sous-ensemble d'une ou plusieurs articulations simples (37a-e, 47b-c) parmi ladite pluralité d'articulations simples dudit mécanisme (10a, 10c, 11, 81, 90);
disposer de manière rotative des poulies folles (32a-e, 42a-f) respectives autour de l'axe de ladite ou desdites articulations simples (37a-e, 47b-c) dudit sous-ensemble;
disposer un câble inextensible (33, 43) selon un acheminement prédéfini, ledit acheminement s'étendant entre un point de traction (34, 44) sur ledit câble en amont de ladite première poulie folle (32a, 42a) et un point terminal (36, 46) défini sur l'une desdites liaisons (3, 5) ou sur ledit mécanisme (10a, 10c, 11, 81, 90) ; et ledit acheminement comprenant des arcs de contact respectifs dudit câble inextensible (33, 43) autour desdites poulies folles (32a-e, 42a-f) ;
**caractérisé en ce que** le nombre de poulies folles (32a-e, 42a-f) qui sont disposées au niveau de ladite ou desdites articulations simples (37a-e, 47b-c) dudit sous-ensemble est supérieur au nombre dudit ou desdits degrés de liberté et **en ce que** ledit acheminement est conçu de sorte que pour un mouvement donné dudit mécanisme (10a, 10c, 11, 81, 90), tous lesdits arcs de contact augmentent en longueur,
ou diminuent tous en longueur, de sorte qu'en tirant sur ledit câble inextensible (33, 43) au niveau dudit point de traction (34, 44) un couple multiplié soit produit au niveau de chaque poulie folle, ledit couple multiplié étant la somme de couples singuliers produits par ledit câble inextensible (33, 43), ledit couple multiplié provoquant un mouvement relatif entre lesdites liaisons (3, 5).

2. Procédé selon la revendication 1, dans lequel une première articulation simple (37a) dudit sous-ensemble a son axe de rotation respectif défini par rapport à ladite première liaison (3).

3. Procédé selon la revendication 1, dans lequel ledit sous-ensemble comprend au moins deux articulations simples, et la distance entre tout couple d'articulations simples consécutives (37a-e, 47b-c) dudit sous-ensemble est inchangée pendant tout mouvement dudit mécanisme (10a, 10c, 11, 81, 90).

4. Procédé selon la revendication 1, dans lequel ledit sous-ensemble d'une ou plusieurs articulations simples est un premier sous-ensemble d'une ou plusieurs articulations simples, dans lequel ledit câble inextensible, ledit acheminement respectif, ledit point de traction et ledit point terminal sont respectivement un premier câble inextensible (33, 43), un premier acheminement, un premier point de traction (34, 44) et un premier point terminal (36, 46), comprenant en outre les étapes consistant à :

sélectionner un second sous-ensemble d'une ou plusieurs articulations simples parmi ladite pluralité d'articulations simples dudit mécanisme (81) :

disposer de manière rotative des poulies folles (32a-e, 42a-f) respectives autour de l'axe de ladite ou desdites articulations simples dudit sous-ensemble ;
disposer un second câble inextensible (53, 63) selon un second acheminement prédéfini, ledit second acheminement s'étendant entre un second point de traction (54, 64) sur ledit second câble en amont de ladite première poulie folle (32a, 42a) et un second point terminal (36, 46) défini sur l'une desdites liaisons (3, 5) ou sur ledit mécanisme (81) ; et ledit second acheminement comprenant des arcs de contact respectifs dudit second câble inextensible (53, 63) partiellement enroulé autour desdites poulies folles (32a-c, 42a-f) ; dans lequel le nombre de poulies folles (32a-c, 42a-f) qui sont disposées au niveau de ladite ou desdides articulations simples dudit second sous-ensemble est supérieur au nombre dudit ou desdits degrés de liberté,
de sorte que ledit mécanisme (81) soit bilatéralement actionné en tirant ledit premier et ledit second câble inextensible (53, 63) au niveau desdits premier et second points de traction respectifs (54, 64), c'est-à-dire que des couples/forces opposés sont appliqués de manière sélective audit mécanisme (81) ce qui provoque des mouvements relatifs opposés correspondants entre lesdites première et seconde liaisons (3, 5).

**5.** Procédé selon la revendication 4, dans lequel une première articulation simple dudit sous-ensemble a son axe de rotation respectif défini par rapport à ladite première liaison (3).

**6.** Procédé selon la revendication 4, dans lequel :

lesdits premier et second sous-ensembles d'une ou plusieurs articulations simples coïncident les uns avec les autres,
lesdits premier et second câbles inextensibles (53, 63) forment sur chacune desdites poulies (32a-c, 42a-f) des premier et second arcs de contact respectifs de sorte que les premiers arcs de contact varient de façon inverse par rapport auxdits seconds arcs de contact pendant lesdits mouvements dudit mécanisme (81), c'est-à-dire lorsque lesdits premiers arcs de contact augmentent, lesdits seconds arcs de contact diminuent d'une même longueur.

**7.** Procédé selon la revendication 1, dans lequel une pluralité de poulies folles (32a-c) sont disposées de manière rotative autour dudit axe d'une articulation simple (37a) sélectionnée parmi ladite ou lesdites articulations simples dudit sous-ensemble, et une poulie de renvoi (68) est disposée de préférence avec son axe (69) parallèle à l'axe de ladite articulation simple (37a) sélectionnée à une distance prédéfinie de ladite articulation simple sélectionnée (37a), ledit câble inextensible (33) formant des arcs de contact redondants (62) avec chaque poulie folle de ladite pluralité de poulies folles (32a-c), et des arcs de renvoi (67) autour de ladite poulie de renvoi (68), lesdits arcs de renvoi (67) alternant par rapport auxdits arcs de contact redondants (62) le long dudit câble inextensible (33).

**8.** Procédé selon la revendication 1, dans lequel ledit mécanisme est un mécanisme en série (10c, 81, 90) ayant au moins deux degrés de liberté et comprend une partie de mécanisme proximale (10a, 11) et une partie de mécanisme distale (10b, 15, 17), dans lequel une partie de câble dudit acheminement qui déplace la partie de mécanisme distale (10b, 15, 17) est enroulée également sur des poulies folles (42a, 42f, 42a-c) de ladite partie de mécanisme proximale (10a, 11) de sorte que ladite partie de mécanisme proximale (10a, 11) ne soit pas affectée par ladite partie de câble.

**9.** Procédé selon la revendication 8, dans lequel :

ladite partie de câble dudit acheminement qui déplace ladite partie de mécanisme distale (10b, 15, 17) et qui est enroulée entour des poulies folles (42a, 42f, 42a-c) de ladite partie de mécanisme proximale (10a, 11) a une longueur totale inchangée pendant tout mouvement de ladite partie de mécanisme proximale (10a, 11);
les rayons desdites poulies folles (42a, 42f, 42a-c) de ladite partie de mécanisme proximale (10a, 11) sur laquelle ladite partie de câble est enroulée ont un signe opposé selon que lesdits arcs de contact respectif augmentent ou diminuent en longueur pendant un mouvement de ladite partie de mécanisme proximal (10a, 11), et lesdits rayons ont une somme égale à zéro.

**10.** Mécanisme (10a, 10c, 11, 81, 90) avec un nombre prédéterminé de degrés de liberté, ledit mécanisme comprenant une pluralité d'articulations simples, chaque articulation simple ayant un axe de rotation, ledit mécanisme (10a, 10c, 11, 81, 90) étant relié à une première liaison rigide (3) et une seconde liaison rigide (5), et ledit mécanisme (10a, 10c, 11, 81, 90) étant conçu pour imposer un mouvement relatif prédéfini entre ladite première liaison rigide (3) et ladite seconde liaison rigide (5),
des poulies folles (32a-e, 42a-f) respectives disposées autour de l'axe d'un sous-ensemble d'une ou plusieurs articulations simples (37a-e, 47b-c) de ladite pluralité d'articulations simples dudit mécanisme (10a, 10c, 11, 81, 90) ;
un câble inextensible (33, 43) disposé selon un acheminement prédéfini, ledit acheminement s'étendant entre un point de traction (34, 44) sur ledit câble en amont de ladite première poulie folle (32a, 42a) et un point terminal (36, 46) défini sur l'une desdites liaisons (3, 5) ou sur ledit mécanisme (10a, 10c, 11, 81, 90) ; et ledit acheminement comprenant des arcs de contact respectifs dudit câble inextensible (33, 43) autour desdites poulies folles (32a-e, 42a-f) ;
**caractérisé en ce que** le nombre de poulies folles (32a-e, 42a-f) qui sont disposées au niveau de ladite ou desdites articulations simples (37a-e, 47b-c) dudit sous-ensemble est supérieur au nombre dudit ou desdits degrés de liberté et **en ce que** ledit acheminement est conçu de sorte que pour un mouvement donné dudit mécanisme (10a, 10c, 11, 81, 90), tous lesdits arcs de contact augmentent en longueur, ou diminuent tous en longueur, de sorte qu'en tirant sur ledit câble inextensible (33,43)
au niveau dudit point de traction (34, 44) un couple multiplié soit produit qui est la somme des couples singuliers produits par ledit câble inextensible (33, 43) au niveau de chaque poulie folle, ledit couple multiplié causant un mouvement relatif entre lesdites liaisons (3, 5).

**11.** Mécanisme selon la revendication 10, dans lequel ledit mécanisme est sélectionné dans le groupe constitué de :

un mécanisme à centre de rotation distant basé sur un mécanisme à pantographe (11, 81, 90) ;
un mécanisme à parallélogramme (10a, 10c).

**12.** Exosquelette de main, comprenant :

une liaison de base (3) disposée lors de l'utilisation en étant sensiblement intégrée au dos d'une main d'un utilisateur,
au moins un exosquelette doigt (80), comprenant un mécanisme (81, 90) ayant deux degrés de liberté ou plus, ledit exosquelette doigt (80) comprenant :

une liaison proximale (87) reliée à ladite liaison de base (3) par l'intermédiaire d'un mécanisme à centre de rotation distant proximal (11), en particulier un mécanisme à pantographe, qui a un axe de rotation (12) sensiblement aligné avec l'articulation de flexion/extension entre la phalange proximale du doigt (100) et le métacarpe,
une liaison médiale (95) reliée à ladite liaison proximale (87) par l'intermédiaire d'un mécanisme à centre de rotation distant médial (13), en particulier un mécanisme â pantographe, qui a un axe de rotation (14) sensiblement aligné avec l'articulation de flexion/extension entre les phalanges médiale et proximale du doigt (100),
dans lequel au moins un mécanisme à centre de rotation distant desdits mécanismes à centre de rotation distant (11, 13) est un mécanisme selon la revendication 10.

**13.** Exosquelette de main selon la revendication 12, dans lequel ledit mécanisme (81) à doigt (100) comprend une liaison distale (5) disposée lors de l'utilisation en contact avec le côté de la paume de la phalange distale dudit doigt (100), ladite liaison distale étant reliée à ladite liaison interne (95) au moyen d'une partie de mécanisme distale (15, 17) ayant un degré de liberté de rotation, ledit mécanisme de liaison distale ayant un axe de rotation (16) sensiblement aligné avec le joint de flexion/extension entre les phalanges distale et médiale du doigt (100), ladite partie de mécanisme distale (15, 17) étant sélectionnée dans le groupe constitué de :

un mécanisme à centre de rotation distant (17), basé sur un mécanisme à pantographe, formant avec lesdits mécanismes proximal et médial (11, 13) un mécanisme à trois degrés de liberté (90) qui est actionné par le procédé selon les revendications 1 à 9 ;
un mécanisme quadrilatère croisé simple (15, 79), actionné par une rotation de ladite liaison médiale (95) par rapport à ladite liaison proximale (87).

**14.** Exosquelette de main selon la revendication 12 ou 13, dans lequel ledit mécanisme interne (13) est actionné au moyen d'un câble inextensible (53, 63) qui forme des arcs de contact sur lesdites poulies folles (42a-c) dudit mécanisme proximal (11), ledit câble produisant dans lesdites poulies folles (42a-c) dudit mécanisme proximal (11) un couple qui a une valeur de couple en résultant non nulle lors d'un mouvement dudit mécanisme médial (13), et/ou ladite partie de mécanisme distale (17) est actionnée au moyen d'un autre câble inextensible ayant des parties qui sont enroulées autour des poulies folles (42a-f) dudit mécanisme proximal et/ou médial (11, 13), ledit autre câble produisant au niveau desdites poulies folles (42a-f) dudit mécanisme proximal et/ou médial (11) des couples qui ont une valeur de couple en résultant non nulle couple pendant un mouvement de ladite partie de mécanisme distale (17).

# Fig. 1'

*( PRIOR ART )*

# Fig. 1"

*( PRIOR ART )*

## Fig. 2

( PRIOR ART )

## Fig. 3

## Fig. 4

## Fig. 5

## Fig. 6

## Fig. 7

**Fig. 8**

**Fig. 9**

Fig. 10

**Fig. 11**

## Fig. 12

## Fig.13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006264915 A
- US 2003221504 A
- WO 9510396 A
- US 2007089557 A
- US 5912658 A